(19)

Europäisches
Patentamt
European
Patent Office
Office européen
des brevets

(11) **EP 4 749 343 A1**

(12) **EUROPEAN PATENT APPLICATION**
published in accordance with Art. 153(4) EPC

(43) Date of publication:
**27.05.2026 Bulletin 2026/22**

(21) Application number: **24882872.5**

(22) Date of filing: **24.10.2024**

(51) International Patent Classification (IPC):
**G02B 13/00** (2006.01)    **G02B 9/34** (2006.01)
**G02B 9/02** (2006.01)    **G03B 9/02** (2021.01)
**G02B 3/00** (2006.01)

(52) Cooperative Patent Classification (CPC):
**G02B 3/00; G02B 9/02; G02B 9/34; G02B 13/00;
G03B 9/02**

(86) International application number:
**PCT/KR2024/016332**

(87) International publication number:
**WO 2025/089845 (01.05.2025 Gazette 2025/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.10.2023 KR 20230142723
22.12.2023 KR 20230189326**

(71) Applicant: **Samsung Electronics Co., Ltd.
Suwon-si, Gyeonggi-do 16677 (KR)**

(72) Inventor: **KIM, Moonjoon
Suwon-si Gyeonggi-do 16677 (KR)**

(74) Representative: **HGF
HGF Limited
4th Floor, 1 City Square
Leeds LS1 2ES (GB)**

(54) **LENS ASSEMBLY AND ELECTRONIC DEVICE COMPRISING SAME**

(57) According to an embodiment of the present disclosure, an electronic device may be provided. The electronic device may include a lens assembly. The lens assembly may comprise: a lens group including a first lens, a second lens, a third lens, and a fourth lens sequentially arranged along an optical axis (O-I) in a direction from an object side to an image side; and an image sensor including an aperture and an imaging surface (img) on which an image (I) is formed. The first lens may have positive refractive power, the second lens may have negative refractive power, the third lens may be convex toward an image side, and the fourth lens may have negative refractive power. Various other embodiments are also possible.

FIG. 6A

EP 4 749 343 A1

**Description**

**[Technical Field]**

Examples disclosed herein relate to a lens assembly and an electronic device including the same.

**[Background Art]**

Optical devices (e.g., a camera capable of capturing images or videos) have come to be widely used. Conventionally, film-type optical devices were mainly used, but in recent years, digital cameras or video cameras having a solid-state image sensor such as a charge-coupled device (CCD) or a complementary metal-oxide semiconductor (CMOS) have been widely distributed. Optical devices that adopt a solid image sensor (CCD or CMOS) are gradually replacing film-type optical devices because storing, copying, and moving images is easier compared to the film-type optical devices.

In order to obtain high quality images and/or videos, an optical device may include a lens assembly (or optical system) including a plurality of lenses and an image sensor with a high pixel count. The lens assembly may make it possible to obtain high-quality (high-resolution) images and/or videos by having, for example, a low F-number (Fno) and less aberration. In order to obtain a low f-number (Fno) and less aberration, in other words, in order to obtain bright and high-resolution images, it is necessary to combine multiple lenses. As the number of pixels included in the image sensor increases, the pixel count of the image sensor becomes higher, and the image sensor with a higher pixel count may acquire high-definition (high-resolution) images and/or videos. In order to implement a high-pixel image sensor in a limited mounting space within an electronic device, a plurality of very small pixels, for example, micrometer-scale pixels, may be arranged. Recently, image sensors containing tens to hundreds of millions of micrometer-scale pixels have also been installed in portable electronic devices such as smartphones and tablet PCs. Such high-performance optical devices may have the effect of enticing users to purchase electronic devices.

The above information may be provided as a related art for the purpose of helping understanding of the disclosure. No claim or determination is made as to whether any of the foregoing may be applied as prior art with respect to the disclosure.

**[Disclosure of Invention]**

**[Solution to Problems]**

An embodiment of the disclosure may provide an electronic device. The electronic device may comprise a lens assembly. The lens assembly may comprise a lens group comprising a first lens, a second lens, a third lens, and a fourth lens sequentially arranged along an optical axis O-I in a direction from an object side to an image side, an aperture, and an image sensor comprising an imaging surface (img) on which an image (I) is formed. The first lens may have positive refractive power, the second lens may have negative refractive power, the third lens may have a convex shape toward the image side, and the fourth lens may have negative refractive power, and the lens assembly may satisfy [Formula 1] to [Formula 4] below,

$$[Formula\ 1]$$

$$IH \geq 2.8\ mm$$

$$[Formula\ 2]$$

$$TTL\text{-}ASL \leq 0.01\ mm$$

[Formula 3]

$$L2MED/L1S1ED \leq 1.05$$

[Formula 4]

$$f/EPD \leq 2.5$$

(here, in [Formula 1], IH is half a diagonal length of the image sensor, in [Formula 2], TTL is a distance from an object-side surface S3 of the first lens to the imaging surface of the image sensor, and ASL is a distance from the aperture to the imaging surface of the image sensor, in [Formula 3], L1S1ED is an effective diameter of the object-side surface S3 of the first lens, and L2MED is a larger value between an effective diameter of an object-side surface S5 of the second lens and an effective diameter of a surface of an image-side surface S6 of the second lens, in [Formula 4], f is a composite focal length of the lens assembly, and EPD is an entrance pupil).

An embodiment of the disclosure may provide a lens assembly. The lens assembly may comprise a lens group comprising a first lens, a second lens, a third lens, and a fourth lens sequentially arranged along an optical axis O-I in a direction from an object side to an image side, an aperture sto, and an image sensor IS comprising an imaging surface img on which an image I is formed. The first lens has positive refractive power, an object-side surface S3 of the first lens has a convex shape toward an object, the second lens has negative refractive power, the third lens has a convex shape toward the image side, and the fourth lens has negative refractive power, and the lens assembly may satisfy [Formula 1] to [Formula 4] below,

[Formula 1]

$$IH \geq 2.8 \text{ mm}$$

[Formula 2]

$$TTL\text{-}ASL \leq 0.01 \text{ mm}$$

[Formula 3]

$$L2MED/L1S1ED \leq 1.05$$

[Formula 4]

$$f/EPD \leq 2.5$$

(here, in [Formula 1], IH is half a diagonal length of the image sensor, in [Formula 2], TTL is a distance from an object-side surface S3 of the first lens to the imaging surface of the image sensor, and ASL is a distance from the aperture to the imaging surface of the image sensor, in [Formula 3], L1S1ED is an effective diameter of the object-side surface S3 of the first lens, and L2MED is a larger value between an effective diameter of an object-side surface S5 of the second lens and an effective diameter of a surface of an image-side surface S6 of the second lens, in [Formula 4], f is a composite focal length of the lens assembly, and EPD is an entrance pupil).

**[Brief Description of Drawings]**

FIG. 1 is a block diagram of an electronic device according to an embodiment disclosed herein in a network environment.

FIG. 2 is a block diagram illustrating a camera module according to an embodiment disclosed herein.

FIG. 3 is a front perspective view illustrating an electronic device according to an embodiment disclosed herein.

FIG. 4 is a rear perspective view illustrating the electronic device according to an embodiment disclosed herein.

FIG. 5 is a cross-sectional view illustrating a portion of a display and a lens assembly according to an embodiment disclosed herein.

FIG. 6A is a view illustrating the configuration of a lens according to an embodiment disclosed herein.

FIG. 6B is a graph showing the spherical aberrations of the lens assembly of FIG. 6A according to an embodiment disclosed herein.

FIG. 6C is a graph showing the astigmatic field curves of the lens assembly of FIG. 6A according to an embodiment disclosed herein.

FIG. 6D is a graph showing the distortion aberration of the lens assembly of FIG. 6A according to an embodiment disclosed herein.

FIG. 7A is a view illustrating the configuration of a lens assembly according to an embodiment disclosed herein.

FIG. 7B is a graph showing the spherical aberrations of the lens assembly of FIG. 7A according to an embodiment disclosed herein.

FIG. 7C is a graph showing the astigmatic field curves of the lens assembly of FIG. 7A according to an embodiment disclosed herein.

FIG. 7D is a graph showing the distortion aberration of the lens assembly of FIG. 7A according to an embodiment disclosed herein.

FIG. 8A is a view illustrating the configuration of a lens assembly according to an embodiment disclosed herein.

FIG. 8B is a graph showing the spherical aberrations of the lens assembly of FIG. 8A according to an embodiment disclosed herein.

FIG. 8C is a graph showing the astigmatic field curves of the lens assembly of FIG. 8A according to an embodiment disclosed herein.

FIG. 8D is a graph showing the distortion aberration of the lens assembly of FIG. 8A according to an embodiment disclosed herein.

FIG. 9A is a view illustrating the configuration of a lens assembly according to an embodiment disclosed herein.

FIG. 9B is a graph showing the spherical aberrations of the lens assembly of FIG. 9A according to an embodiment disclosed herein.

FIG. 9C is a graph showing the astigmatic field curves of the lens assembly of FIG. 9A according to an embodiment disclosed herein.

FIG. 9D is a graph showing the distortion aberration of the lens assembly of FIG. 9A according to an embodiment disclosed herein.

FIG. 10A is a view illustrating the configuration of a lens assembly according to an embodiment disclosed herein.

FIG. 10B is a graph showing the spherical aberrations of the lens assembly of FIG. 10A according to an embodiment disclosed herein.

FIG. 10C is a graph showing the astigmatic field curves of the lens assembly of FIG. 10A according to an embodiment disclosed herein.

FIG. 10D is a graph showing the distortion aberration of the lens assembly of FIG. 10A according to an embodiment disclosed herein.

Throughout the appended drawings, like reference numerals may be assigned to like components, configurations, and/or structures.

## [Mode for Carrying out the Invention]

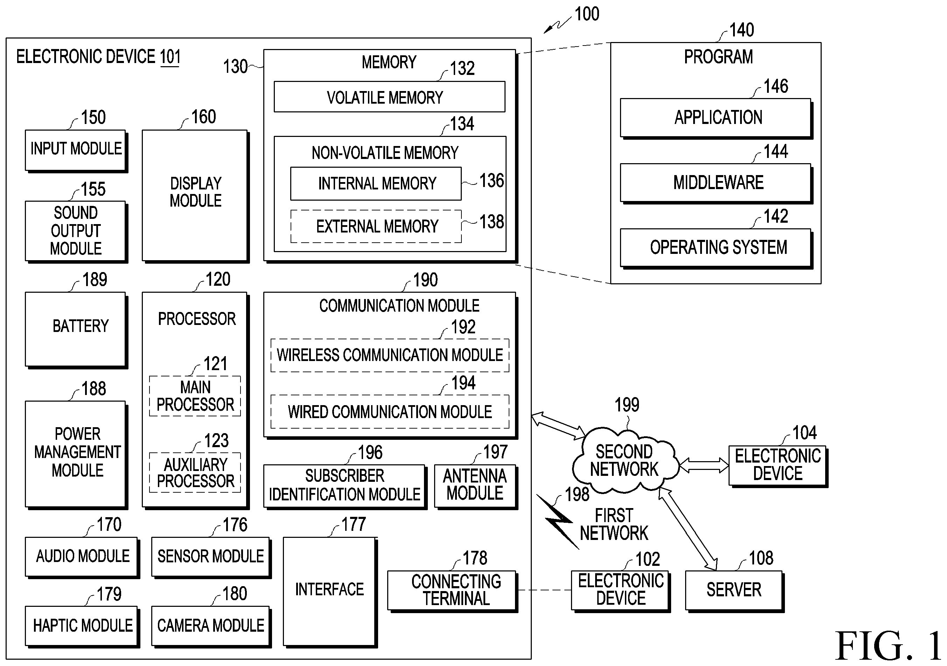

FIG. 1 is a block diagram illustrating an electronic device 101 in a network environment 100 according to an embodiment of the disclosure. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one of the components (e.g., the connecting terminal 178) may be omitted from the electronic device 101, or one or more other components may be added in the electronic device 101. In an embodiment, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

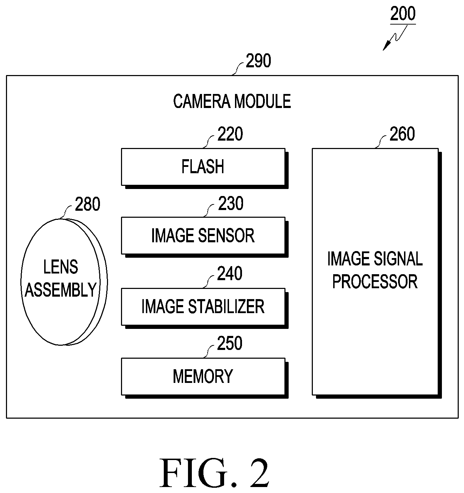

FIG. 2 is a block diagram illustrating a camera module 290 (e.g., the camera module 180 in FIG. 1) according to an embodiment of the disclosure. Referring to FIG. 2, the camera module 290 may include a lens assembly 280, a flash 220, an image sensor 230, an image stabilizer 240, memory 250 (e.g., buffer memory), or an image signal processor 260. In an embodiment, the lens assembly 280 may include the image sensor 230. The lens assembly 280 may collect light emitted from an object to be imaged. The lens assembly 280 may include one or more lenses. According to an embodiment, the camera module 290 may include multiple lens assemblies 280. In this case, the camera module 290 may form, for example, a dual camera, a 360-degree camera, or a spherical camera. Some of the multiple lens assemblies 280 may have the same lens properties (e.g., field of view, focal length, F-number, or optical zoom), or at least one of the lens assemblies may have one or more lens properties different from those of the other lenses. The lens assemblies 280 may include, for example, a wide-angle lens or a telephoto lens.

The flash 220 may emit light used to enhance light emitted or reflected from an object. According to an embodiment, the flash 220 may include one or more light-emitting diodes (e.g., red-green-blue (RGB) LEDs, white LEDs, infrared LEDs, or ultraviolet LEDs), or a xenon lamp. The image sensor 230 may acquire an image corresponding to an object by converting light emitted or reflected from the object and transmitted through the lens assembly 280 into an electrical signal. According to an embodiment, the image sensor 230 may include one image sensor selected from image sensors having different properties, such as an RGB sensor, a black and white (BW) sensor, an IR sensor, or a UV sensor, multiple image sensors having the same properties, or multiple image sensors having different properties. Each image sensor included in the image sensor 230 may be implemented using, for example, a charge-coupled device (CCD) sensor or a complementary metal oxide semiconductor (CMOS) sensor.

The image stabilizer 240 may move at least one lens included in the lens assembly 280 or the image sensor 230 in a specific direction or may control an operating characteristic of the image sensor 230 (e.g., adjusting read-out timing) in response to the movement of the camera module 290 or the electronic device 201 including the same. This compensates for at least some of negative effects on an image to be captured due to the above-described movement. According to an embodiment, the image stabilizer 240 may detect the movement of the camera module 290 or the electronic device (e.g., the electronic device 101 in FIG. 1) using a gyro sensor (not illustrated) or an acceleration sensor (not illustrated) disposed inside or outside the camera module 290. According to an embodiment, the image stabilizer 240 may be implemented as, for example, an optical image stabilizer. The memory 250 may at least temporarily store at least some of the images acquired via the image sensor 230 for the next image processing task. For example, when image acquisition is delayed or a plurality of images are acquired at high speed depending on a shutter, the acquired original images (e.g., Bayer-patterned images or high resolution images) are stored in the memory 250, and copy images corresponding thereto (e.g., low resolution images) may be previewed using the display module 160 of FIG. 1. Then, when predetermined conditions (e.g., a user input or a system command) are satisfied, at least some of the original images that have been stored in the memory 250 may be acquired and processed by, for example, the image signal processor 260. According to an embodiment, the memory 250 may be configured as at least a portion of memory (e.g., the memory 130 in FIG. 1) or may be configured as separate memory that operates independently from the memory.

The image signal processor 260 may execute one or more image processes on the images acquired by the image sensor 230 or the images stored in the memory 250. The one or more image processes may include, for example, depth map generation, 3D modeling, panorama generation, feature point extraction, image synthesis, or image compensation (e.g., noise reduction, resolution adjustment, brightness adjustment, blurring, sharpening, or softening). Additionally or alternatively, the image signal processor 260 may perform control (e.g., exposure time control, or read-out timing control) for at least one of the components (e.g., the image sensor 230) included in the camera module 290. Images processed by the image signal processor 260 may be stored back in the memory 250 for further processing or may be provided to components outside the camera module 290 (e.g., the memory 130, the display module 160, the electronic device 102, the electronic device 104, or the server 108 of FIG. 1). According to an embodiment, the image signal processor 260 may be configured as at least a portion of the processor (e.g., the processor 120 in FIG. 1) or may be configured as a separate processor that is operated independently of the processor 120. When the image signal processor 260 is configured as a processor separate from the processor 120, the processor 120 may cause at least one image processed by the image signal processor 260 to be displayed through the display module 160 as it is or after further image processing.

According to an embodiment, the electronic device (e.g., the electronic device 101 in FIG. 1) may include a plurality of camera modules 290 having different properties or functions. In this case, for example, at least one of the multiple camera modules 290 may be a wide-angle camera, and at least another one may be a telephoto camera. Similarly, at least one of the multiple camera modules 290 may be a front camera, and at least another one may be a rear camera.

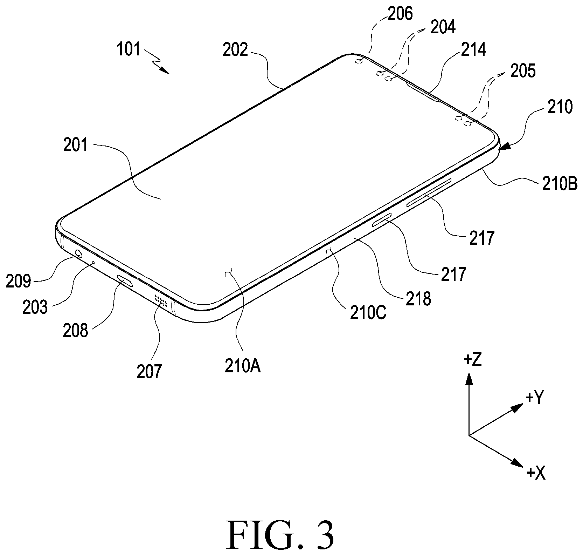

FIG. 3 is a front perspective view illustrating an electronic device according to an embodiment disclosed herein.

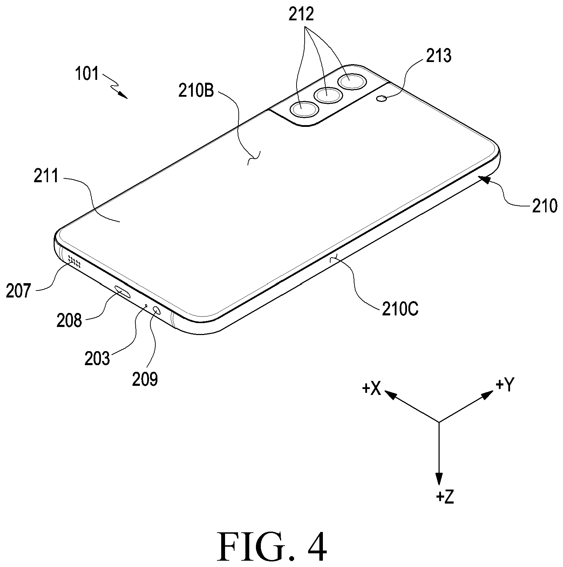

FIG. 4 is a rear perspective view illustrating the electronic device according to an embodiment disclosed herein.

The configuration of the electronic device 101 of FIGS. 3 and 4 may be wholly or partly the same as that of the electronic device 101 of FIG. 1.

Referring to FIGS. 3 and 4, according to an embodiment, the electronic device 101 may include a housing 210 including a first surface (or a front surface) 210A, a second surface (or a rear surface) 210B, and a side surface 210C surrounding the space between the first surface 210A and the second surface 210B. In an embodiment (not illustrated), the housing 210 may refer to a structure that forms some of the first surface 210A of FIG. 2, and the second surface 210B and the side surface 210C of FIG. 3. According to an embodiment, at least a portion of the first surface 210A may be formed of a substantially transparent front surface plate 202 (e.g., a glass plate or a polymer plate including various coating layers). The second surface 210B may be formed of a substantially opaque rear surface plate 211. The rear surface plate 211 may be made of, for example, coated or colored glass, ceramic, polymer, metal (e.g., aluminum, stainless steel (STS), or magnesium), or a combination of two or more of these materials. The side surface 210C may be defined by the side surface structure (or a "side surface bezel structure") 218 coupled to the front surface plate 202 and the rear surface plate 211 and including metal and/or polymer. In an embodiment, the rear surface plate 211 and the side surface structure 218 may be integrated with each other and may include the same material (e.g., a metal material such as aluminum).

Although not illustrated, the front surface plate 202 may include one or more areas that are curved and extend seamlessly from at least a portion of an edge toward the rear surface plate 211. In an embodiment, the front surface plate 202 (or the rear surface plate 211) may include only one of the areas bent and extending toward the rear surface plate 211 (or the front surface plate 202), at one side edge of the first surface 210A. According to an embodiment, the front surface plate 202 or the rear surface plate 211 may have a substantially flat plate shape, and in this case, may not include a bent and extending area. When the bent and extending area is included, the thickness of the electronic device 101 in the portion including the bent and extending area may be smaller than the thicknesses of other portions.

According to an embodiment, the electronic device 101 may include at least one of a display 201, an audio module (not illustrated) (e.g., the audio module 170 in FIG. 1) including one or more sound holes 203, 207, and 214, a sensor module (e.g., the sensor module 176 in FIG. 1), camera modules 205, 212, and 213 (e.g., the camera module 180 in FIG. 1), key input devices 217 (e.g., the input module 150 in FIG. 1), and connector holes 208 and 209 (e.g., the connection terminal 178 in FIG. 1). In an embodiment, in the electronic device 101, at least one of the components (e.g., the key input devices 217 or the light-emitting element 206) may be omitted, or other components may be additionally included.

According to an embodiment, the display 201 may be visually exposed through a substantial portion of, for example, the front surface plate 202. In an embodiment, at least a portion of the display 201 may be visually exposed through the front surface plate 202 forming the first surface 210A or through a portion of the side surface 210C. In an embodiment, the edges of the display 201 may be formed to be substantially the same as the shape of the periphery of the front surface plate 202 adjacent thereto. In an embodiment (not illustrated), the distance between the periphery of the display 201 and the periphery of the front surface plate 202 may be substantially constant in order to enlarge the visually exposed area of the display 201.

In an embodiment (not illustrated), recesses or openings may be provided in a portion of the screen display area of the display 201, and one or more of a sound hole 214, the sensor modules 204, the camera modules 205, and the light-emitting elements 206, which are aligned with the recesses or the openings, may be included. In an embodiment (not illustrated), the rear surface of the screen display area of the display 201 may include at least one of the sound hole 214, the sensor modules 204, the camera modules 205, a fingerprint sensor (not illustrated), and the light-emitting elements 206. In an embodiment (not illustrated), the display 201 may be coupled to or disposed adjacent to a touch-sensitive circuit, a pressure sensor capable of measuring a touch intensity (pressure), and/or a digitizer configured to detect an electromagnetic field-type stylus pen. In an embodiment, at least some of the sensor modules 204 and/or at least some of the key input devices 217 may be disposed on the side surface 210C.

According to an embodiment, an audio module (not illustrated) may include a microphone hole 203 and sound holes 207 and 214. A microphone configured to acquire external sound may be placed inside the microphone hole 203, and in an embodiment, a plurality of microphones may be placed to detect the direction of sound. According to an embodiment, the sound holes 207 and 214 may include an external sound hole 207 and a communication receiver hole 214. In an embodiment, the sound holes 207 and 214 and the microphone hole 203 may be implemented as one hall, or a speaker may be included in the audio module without the sound holes 207 and 214 (e.g., a piezo speaker).

According to an embodiment, the sensor modules 204 may generate electrical signals or data values corresponding to an internal operating state or an external environmental state of the electronic device 101. The sensor modules 204 may include, for example, a first sensor module 204 (e.g., a proximity sensor) and/or a second sensor module (not illustrated) (e.g., fingerprint sensor) disposed on the first surface 210A of the housing 210. According to an embodiment, an additional sensor module may be disposed on the second surface 210B of the housing 210. The fingerprint sensor (not illustrated) may be disposed not only on the first surface 210A (e.g., the display 201) of the housing 210, but also on the second surface 210B or the side surface 210C of the housing 210. The electronic device 101 may further include at least one of, for example, a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor.

According to an embodiment, the camera modules 205, 212, and 213 may include a first camera module 205 facing the first surface 210A of the electronic device 101 and a second camera module 212 facing the second surface 210B and/or a flash 213. For example, the first camera module 205 and/or the second camera module 212 may include one or more lenses, an image sensor, and/or an image signal processor. According to an embodiment, some camera modules 205 among the camera modules 205 and 212 and/or some sensor modules (e.g., the sensor modules 204) may be disposed to be exposed to the outside through at least a portion of the display 201. According to an embodiment, the first camera modules 205 may include a punch hole camera disposed inside a hole or recess provided in the rear surface of the display 201. For example, the first camera module 205 may receive at least a portion of the light incident on the first surface (or front surface) 210A of the electronic device 101 through the display 201 inside the electronic device 101. According to an embodiment, the first camera module 205 and/or the sensor modules 204 may be disposed from the inner space of the electronic device 101 to the front surface plate 202 of the display 201 to come into contact with the outer environment through a transparent area. In addition, some sensor modules 204 may be disposed in the inner space of the electronic device to perform the functions thereof without being visually exposed through the front surface plate 202.

According to an embodiment, the second camera modules 212 may be disposed inside the housing 210 such that a lens is exposed to the second surface (or the rear surface) 210B of the electronic device 101. For example, the camera modules 212 may be electrically connected to a printed circuit board (e.g., the printed circuit board 240a in FIG. 4). For example, the flash 213 may include a light-emitting diode or xenon lamp. In an embodiment, one or more lenses (e.g., an infrared camera lens, a wide-angle lens, and a telephoto lens) and image sensors may be disposed on one surface of the electronic device 101. In an embodiment, the flash 213 may emit infrared rays. For example, the infrared rays emitted from the flash 213 and reflected by an object may be received through a sensor module (not illustrated) disposed on the second surface 210B of the housing 210. The electronic device 101 or a processor (e.g., the processor 180 in FIG. 1) may detect depth information of the object based on the point in time when the infrared rays are received from the sensor module.

The camera modules 205, 212, and 213 are not limited to the above-described structure, and may be variously changed in design depending on the structure of the electronic device 101, for example, by mounting only some of the camera modules or by adding new camera modules.

According to an embodiment, the electronic device 101 may include a plurality of camera modules (e.g., a dual camera or a triple camera) having different properties (e.g., fields of view) or functions, respectively. For example, the plurality of camera modules 205 and 212 including lenses having different fields of view may be provided, and the electronic device 101 may control the change of the fields of view of the camera modules 205 and 212 executed therein based on a user's selection. For example, at least one of the plurality of camera modules 205 and 212 may be a wide-angle camera, and at least one of other camera modules may be a telephoto camera. Similarly, at least one of the plurality of camera modules 205 and 212 may be a front camera, and at least one of other camera modules may be a rear camera. In addition, the plurality of camera modules 205 and 212 may include at least one of a wide-angle camera, a telephoto camera, or an infrared (IR) camera (e.g., a time-of-flight (TOF) camera, or a structured light camera). According to an embodiment, the IR camera may be operated as at least a part of a sensor module. For example, the TOF camera may be operated as at least a part of a sensor module (not illustrated) for detecting a distance to an object.

According to an embodiment, the key input devices 217 may be disposed on the side surface 210C of the housing 210. In an embodiment, the electronic device 101 may not include some or all of the above-mentioned key input devices 217, and key input devices 217, which are not included, may be implemented in another form, such as soft keys, on the display 201. In an embodiment, the key input devices may include a sensor module disposed on the second surface 210B of the housing 210.

According to an embodiment, the light-emitting element 206 may be disposed on, for example, the first surface 210A of the housing 210. The light-emitting element 206 may provide, for example, the state information of the electronic device 101 in an optical form. In an embodiment, the light-emitting element 206 may provide a light source that is operationally linked with, for example, the camera module 205. The light-emitting element 206 may include, for example, an LED, an IR LED, and a xenon lamp.

According to an embodiment, the connector holes 208 and 209 may include a first connector hole 208 capable of accommodating a connector (e.g., a USB connector) configured to transmit/receive power and/or data to/from an external electronic device, and a second connector hole (e.g., an earphone jack) 209 capable of accommodating a connector configured to transmit/receive an audio signal to/from an external electronic device.

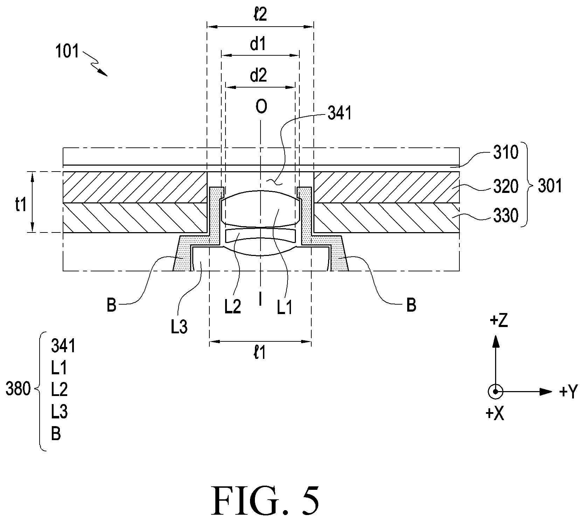

FIG. 5 is a cross-sectional view illustrating a portion of a display and a lens assembly according to an embodiment disclosed herein.

Referring to FIG. 5, in an embodiment, the electronic device 101 (e.g., the electronic device 101 in FIG. 1 and/or the electronic device 101 in FIGS. 3 and 4) may include a display 301 (e.g., the display module 160 in FIG. 1 and the display 201 in FIGS. 3 and 4) and a lens assembly 380 (e.g., the lens assembly 280 in FIG. 2).

According to an embodiment, the display 301 may include a cover glass (or a front surface plate) 310 (e.g., the front surface plate 202 in FIGS. 3 and 4), a display panel 320, and/or a support panel 330. As will be described later, according to an embodiment, the display 301 may include one through hole 341 to accommodate at least a portion of the lens assembly 380.

According to an embodiment, the cover glass 310 may be laminated or disposed on the front surface (e.g., the +Z-direction surface) of the display panel 320. For example, the cover glass 310 may be formed to be substantially transparent in at least a partial area and may provide a protection function for the display panel 320. According to an embodiment, the support panel 330 may be laminated or disposed on the rear surface (e.g., the -Z-direction surface) of the display panel 320. For example, the support panel 330 may include a single layer or multiple layers and may be formed to support the display panel 320.

In an embodiment, the electronic device 101 may include a front camera (e.g., the camera module 280 in FIG. 2 and/or the first camera module 205 in FIG. 3). According to an embodiment, the lens assembly 380 may be included in the front camera of the electronic device 101 (e.g., the first camera module 205 in FIG. 3). According to an embodiment, the front camera (e.g., the first camera module 205 in FIG. 3) including the lens assembly 380 may be a camera disposed below (or behind) the display 301 (e.g., an under-display camera (UDC)).

According to an embodiment, the lens assembly 380 may be disposed to receive light through a camera exposure area of the display 301. Here, the camera exposure area may be a through-hole 341 (e.g., a punch-hole or perforated hole) formed in a portion of the display 310.

In an embodiment, the through hole 341 of the display 301 may be disposed in an active area (or screen area) of the display 301 in which an image is displayed or an inactive area of the display 301 which is disposed around the active area and in which an image is not displayed. According to an embodiment, the through hole 341 may be formed in the active area of the display 301, and in this case, the through hole 341 may extend from the support panel 330 to the display panel 320 in the thickness direction of the electronic device 101 (e.g., the Z-axis direction). Referring to FIG. 5, for example, the thickness (e.g., thickness in the Z-axis direction) of the through hole 341 may correspond to t1 in FIG. 5, and the thickness t1 may be about 1 mm to about 1.5 mm. However, the range in which the through hole 341 is formed on the display 301 is not limited, and according to an embodiment, the through hole 341 may be formed only in the support panel 330 or may be formed to penetrate a portion of the thickness (e.g., the thickness in the Z-axis direction) of the display panel 320 from the support panel 330.

According to an embodiment, the lens assembly 380 may include a lens group including a plurality of lenses (e.g., at least four lenses) and a lens barrel B disposed around the lens group.

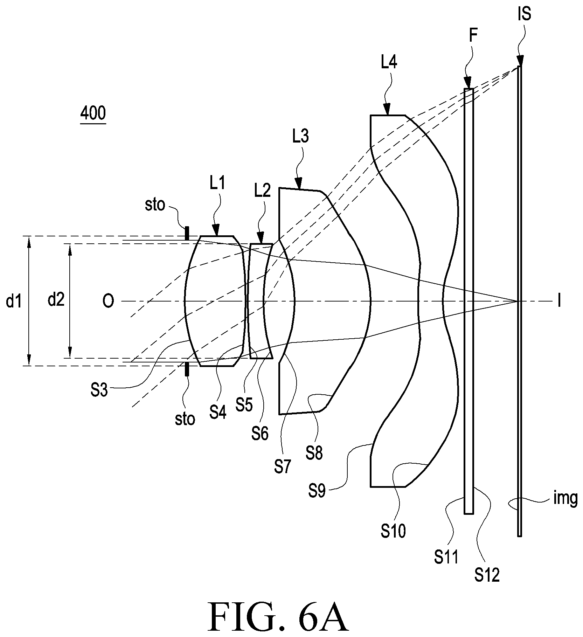

According to an embodiment, the lens assembly 380 or the lens group may include a first lens L1, a second lens L2, a third lens L3, and a fourth lens (e.g., the fourth lens L4 in FIG. 6A). According to an embodiment, the lens assembly 380 may be disposed on an optical axis O-I passing through the centers of the plurality of lenses (e.g., lenses L1, L2, L3 in FIG. 5 and/or the fourth lens L4 in FIG. 6A) from the object (or external object) side to the image side. According to an embodiment, the first lens L1 may be disposed or positioned within the through hole 341 of the display 301. According to an embodiment, all or part of the second lens L2 may be disposed or located within the through hole 341 of the display 301. According to an embodiment, the diameter (or effective diameter) (e.g., d1 in FIG. 5) of the first lens L1 may be larger than the diameter (or effective diameter) (e.g., d2 in FIG. 5) of the second lens L2.

According to an embodiment, the lens barrel B may be disposed within the electronic device 101 and may be formed to support lenses (e.g., the lenses L1, L2, and L3 in FIG. 5 and/or the fourth lens L4 in FIG. 6A). For example, the portion of the lens barrel B where the first lens L1 and the second lens L2 are disposed may be formed in a cylindrical shape, but is not limited thereto. Referring to FIG. 5, the diameter of the portion disposed in the through hole 341 of the lens barrel B (e.g., 11 in FIG. 5) may be smaller than the diameter of the through hole 341 (e.g., 12 in FIG. 5).

[Example 1]

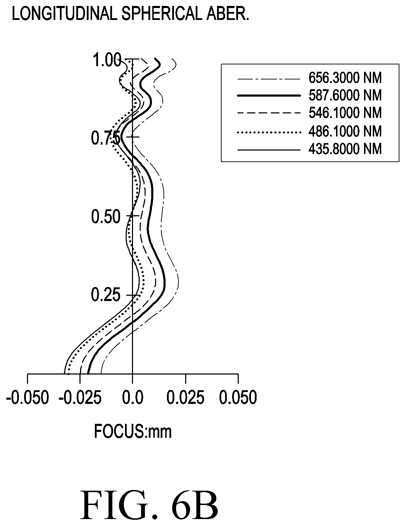

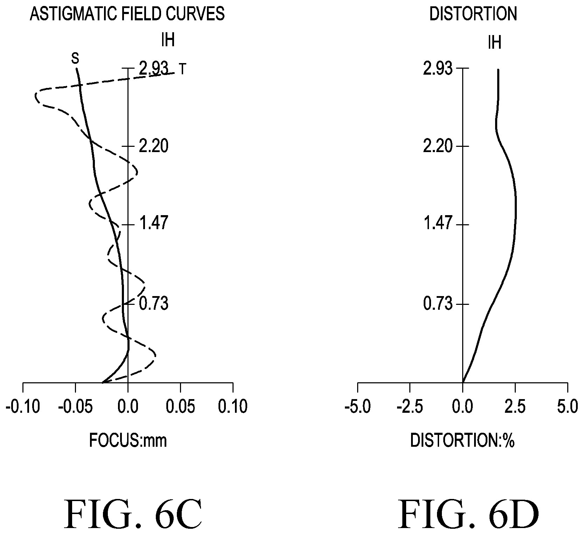

FIG. 6A is a view illustrating the configuration of a lens assembly according to an embodiment disclosed herein. FIG. 6B is a graph showing spherical aberration of the lens assembly of FIG. 6A according to an embodiment disclosed herein. FIG. 6C is a graph showing the astigmatic field curves of the lens assembly of FIG. 6A according to an embodiment disclosed herein. FIG. 6D is a graph showing the distortion aberration of the lens assembly of FIG. 6A according to an embodiment disclosed herein.

The configuration of the lens assembly 400 of FIG. 6A may be wholly or partly the same or similar to the configuration of the lens assembly 380 of FIG. 5.

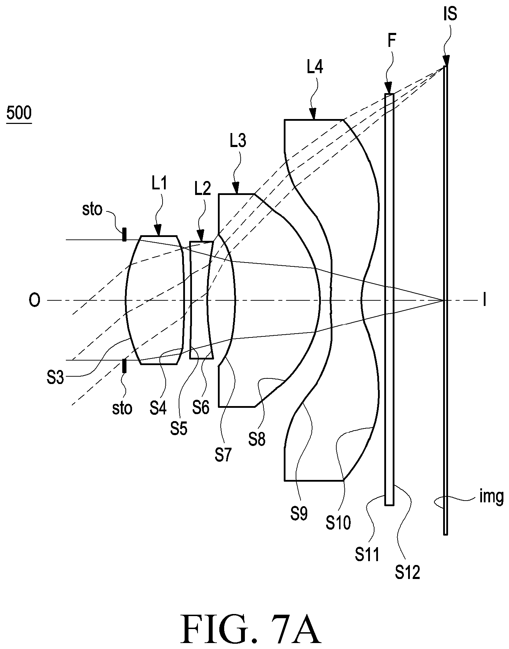

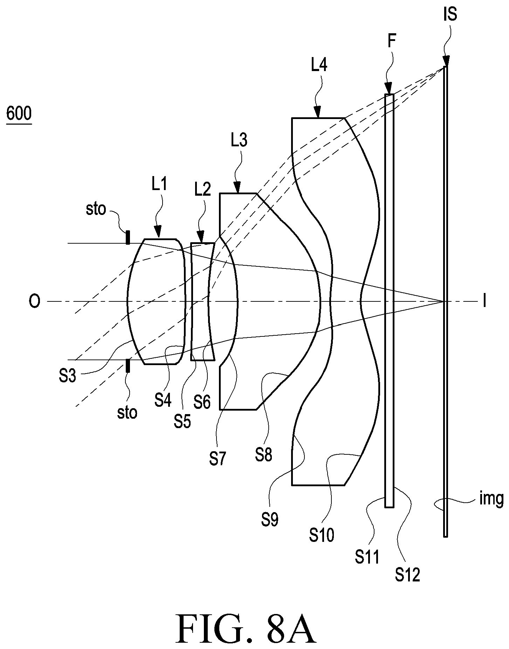

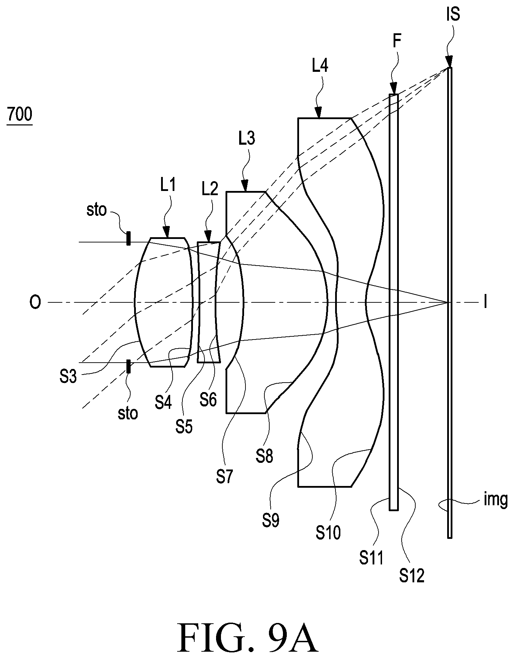

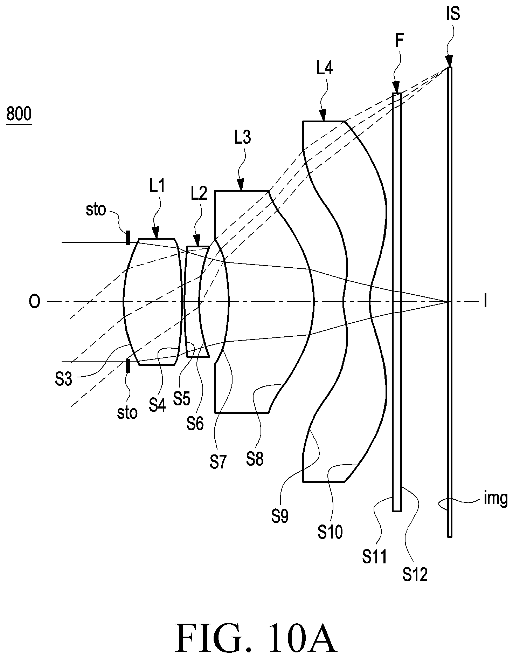

Referring to FIGS. 6A to 6D, in an embodiment, an electronic device (e.g., the electronic device 101 of FIGS. 1, 3, and 4) may include a lens assembly 400 (e.g., the lens assembly 280 of FIG. 2 and/or the lens assembly 380 of FIG. 5) (or an optical system). According to an embodiment of the disclosure, a lens assembly (e.g., the lens assembly 400 in FIG. 6A, the lens assembly 500 in FIG. 7A, the lens assembly 600 in FIG. 8A, the lens assembly 700 in FIG. 9A, and/or the lens assembly 800 of FIG. 10A) may configure at least a portion of a camera module of the electronic device 101 (e.g., the camera module 180 of FIG. 1, the camera module 290 of FIG. 2, the camera module 205 of FIG. 3, and/or the camera module 212 of FIG. 4). According to an embodiment of the disclosure, the lens assembly 400 may be designed to implement a bright wide-angle (e.g., a field of view (FOV) of about 80 degrees) optical system with high pixels while being miniaturized and/or slimmed to be suitable for application to a hole-in-display. For example, the lens assembly 400 may, but not exclusively, configure an optical system (e.g., a direct optical system) in which the path through which incident light reaches the image sensor IS is formed in a straight line, and may configure a curved optical system in which incident light is reflected/refracted at least once and reaches the image sensor IS when including a reflection member (e.g., a prism or a mirror).

According to an embodiment, the lens assembly 400 may be arranged on the optical axis O-I passing through the centers of the plurality of lenses L1, L2, L3, and L4 from the object (or external object) side to the image side. In the following description of the configuration of each of the lenses L1, L2, L3, and L4, for example, the object side may indicate the side where an object O is located, and the image side may indicate the side where an imaging surface img on which an image I is formed is located.

According to an embodiment, the lens assembly 400 includes a lens group including a plurality of lenses (e.g., at least four elements) L1, L2, L3, and L4, an aperture sto, and/or an image sensor IS. According to an embodiment, the plurality of lenses L1, L2, L3, and L4 of the lens group, the aperture sto, and/or the image sensor IS may be substantially aligned on the optical axis O-I.

Referring to FIG. 6A, in an embodiment, the lens assembly (or lens group) 400 may include a first lens L1 (e.g., the first lens L1 in FIG. 5), a second lens L2 (e.g., the second lens L2 in FIG. 5), a third lens L3 (e.g., the first lens L3 in FIG. 5) and/or a fourth lens L4 sequentially arranged and/or aligned along the optical axis O-I in the direction from the object O toward the image sensor IS. According to an embodiment, each of the lenses L1, L2, L3, and L4 may include an "object-side surface", which is the surface facing the object O, and an "image-side surface", which is the surface facing the image I (or image sensor IS). For example, the first lens L1 may include an object-side surface S3 and an image-side surface S4. For example, the second lens L2 may include an object-side surface S5 and an image-side surface S6. For example, the third lens L3 may include an object-side surface S7 and an image-side surface S8. For example, the fourth lens L4 may include an object-side surface S9 and an image-side surface S10. According to an embodiment, the lenses L1, L2, L3, and L4 may be made of synthetic resin (e.g., plastic). However, the number and material of lenses in the lens group of the disclosure are not limited. For example, additional lenses may be included or at least one lens may be made of glass.

According to an embodiment, at least some of the lenses L1, L2, L3, and L4 may have at least one of the object-side surface or the image-side surface formed as an aspheric surface. For example, by forming the surfaces of the lenses L1, L2, L3, and L4 aspherically, spherical aberration that may occur in the lenses can be suppressed, and the occurrence of coma at the periphery of the image sensor IS can be reduced, astigmatic field curves can be easily controlled, and the occurrence of field curvature from the center to the periphery of the imaging surface img of the image sensor IS can be reduced.

In the detailed description below, the shapes of the object-side surfaces, which are the surfaces facing the object O, of the lenses L1, L2, L3, and L4, and/or the image-side surfaces, which are the surfaces facing the image sensor IS or the imaging surface img, may be described using the terms "concave" or "convex". A reference to the shapes of the surfaces of the lenses may be a description of the shape of the point of intersection with the optical axis O-I or a "paraxial area" around the point of intersection with the optical axis O-I. The description "the object-side surface has a concave shape" may refer to the shape in which the center of the radius of curvature of the object-side surface is located on the object side. The description "the object-side surface has a convex shape" may refer to the shape in which the center of the radius of curvature of the object-side surface is located on the image sensor IS side. Therefore, even when one surface of a lens (the paraxial area of that surface) is described as having a convex shape, the edge area around the paraxial area of the lens may be concave. Likewise, even when one surface of a lens (the paraxial area of that surface) is described as having a concave shape, the edge area around the paraxial area of the lens may be convex.

In an embodiment, the first lens L1 is the lens closest to the object (or the first lens from the object side) and may have positive refractive power. According to an embodiment, the object-side surface S3 of the first lens L1 may have a convex shape toward the object. For example, the shape of the object-side surface S3 that is convex toward the object can suppress an increase in spherical aberration due to the large diameters of the lenses L1, L2, L3, and L4. According to an embodiment, at least one of the object-side surface S3 and the image-side surface S4 of the first lens L1 may be formed as an aspherical surface. According to an embodiment, the refractive index of the first lens L1 may be relatively small compared to the refractive index of the second lens L2 and may be, for example, about 1.6 or less.

According to an embodiment, the diameter (or effective diameter) (e.g., d1 in FIG. 6A) of the first lens L1 may be larger than the diameter (or effective diameter) (e.g., d2 in FIG. 6A) of the second lens L2. For example, the diameter d1 of the first lens L1 may be the effective diameter of the object-side surface S3 of the first lens L1. For example, the diameter d2 of the second lens L2 may be the larger value between the effective diameter of the object-side surface S5 and the effective diameter of the image-side surface S6 of the second lens L2.

In an embodiment, the second lens L2 is the second lens from the object side and may have negative refractive power. According to an embodiment, the image-side surface S6 of the second lens L2 may have a concave shape toward the image side. For example, the shape of the image-side surface S6, which is concave toward the image side, may contribute to reducing or slimming the total length of the lens assembly 400 and improving aberration.

According to an embodiment, the effective diameter of the second lens L2 may be smaller than the effective diameter of the first lens L1. According to an embodiment, the effective diameter of the object-side surface S5 or the effective diameter of the image-side surface S6 of the second lens L2 is larger than the effective diameter of the object-side surface S3 of the first lens L1. According to an embodiment, the refractive index of the second lens L2 may be larger than the refractive index of the first lens L1, the third lens L3, and/or the fourth lens L4. For example, by forming the refractive index of the second lens L2 to be larger than that of the first lens L1, the lens assembly 400 can be slimmed and chromatic aberration caused by the first lens L1 can be corrected.

In an embodiment, the third lens L3 is the third lens from the object side and may have positive refractive power. According to an embodiment, the third lens L3 may have a meniscus shape that is convex toward the image side, and this shape of the third lens L3 may be advantageous for correcting peripheral aberration. For example, the object-side surface S7 and the image-side surface S8 of the third lens L3 may have a convex shape toward the image side.

In an embodiment, the fourth lens L4 is the fourth lens from the object side and may have negative refractive power. According to an embodiment, the object-side surface S9 and/or the image-side surface S10 of the fourth lens L4 may be formed as an aspherical surface including at least one inflection point. In the disclosure, the inflection point may refer to a point where the sign of curvature (or radius of curvature) changes at the edge area of the lens around the paraxial area of the lens. For example, the inflection point may be located at the boundary of an area where the center of the radius of curvature is located on the object O side and an area where the center of the radius of curvature is located on the image sensor IS side on one lens surface. For example, with at least one inflection point of the object-side surface S9 of the fourth lens L4 as a boundary, the paraxial area may have the center of the radius of curvature located on the image sensor IS side, and the edge area around the paraxial area may have the center of the radius of curvature located on the object O side. According to an embodiment, the image-side surface S10 of the fourth lens L4 may include at least one inflection point. For example, since the image-side surface S10 includes at least one inflection point, the field curvature from the paraxial area around the point where the image-side surface S10 intersects with the optical axis O-I of the image-side surface to the peripheral area (or edge area) around the paraxial area can be reduced or minimized. According to an embodiment, the fourth lens L4 may have a meniscus shape that is convex toward the object in the paraxial area, and the peripheral area around the paraxial area may have a convex inflection shape that is inclined toward the object. This shape of the fourth lens L4 may be advantageous in reducing the effective diameter of the fourth lens L4 as the lens closest to the image sensor IS and slimming the lens assembly 400. According to an embodiment, the refractive index of the fourth lens L4 may be relatively smaller than the refractive index of the second lens L2 and may be, for example, about 1.6 or less.

According to an embodiment, the second lens L2 is configured to have a high refractive index, and the first lens L1, the third lens L3, and/or the fourth lens L4 is configured to have a low refractive index, which may be advantageous to implement a popular lens assembly with relatively reduced manufacturing costs compared to implementing a plurality of lenses as high-refractive lenses.

In an embodiment, at least one of the lenses L1, L2, L3, and L4 and/or the image sensor IS may be configured to reciprocate along the optical axis O-I. According to an embodiment, an electronic device (e.g., the electronic device 101 in FIG. 1 and/or the electronic device 101 in FIGS. 3 and 4) or a processor (e.g., the processor 120 in FIG. 1) may be configured to focus or adjust the focal distance by reciprocating the lenses L1, L2, L3, and L4 and/or the image sensor IS along the optical axis O-I.

According to an embodiment, the aperture sto may be disposed between the object O and the first lens L1 and may be implemented, for example, on one surface of the first lens L1 (e.g., the object-side surface S3). For example, placing the aperture sto in front of the object-side surface S3 of the first lens L1 may be advantageous in reducing the field of view of the optical system and minimizing the diameter of the optical system.

According to an embodiment, the aperture sto is disposed on the object side with respect to the lenses L1, L2, L3, and L4, and may define an area where light is substantially incident onto the lens assembly (e.g., the lens assembly 400 in FIG. 6A, the lens assembly 500 in FIG. 7A, the lens assembly 600 in FIG. 8A, the lens assembly 700 in FIG. 9A, and/or the lens assembly 800 in FIG. 10A). According to an embodiment, the aperture sto may be disposed between the object O and the first lens L1 and may be implemented, for example, on one surface of the first lens L1 (e.g., the object-side surface S3). For example, the lenses L1, L2, L3, and L4 are disposed substantially between the aperture sto and the image sensor IS, and may focus the light incident through the aperture sto and make the light incident on the image sensor IS. For example, placing the aperture sto in front of the object-side surface S3 of the first lens L1 may be advantageous in reducing the field of view of the optical system and minimizing the diameter of the optical system. For example, by placing the aperture sto in front of the object-side surface S3 of the first lens L1, good wide-angle performance can be provided while reducing the diameter of the lens assembly 400, 500, 600, 700, or 800.

Referring to FIG. 6A, according to an embodiment, the aperture sto may be arranged to be aligned with the vertex of the first lens L1. Here, the vertex of the first lens L1 may refer to the central portion of the object-side surface S3 of the first lens L1, that is, the portion closest to the object side or the highest portion. For example, the vertex of the object-side surface S3 of the first lens L1 may be located at the position where the optical axis O-I intersects the object-side surface S3. For example, as another expression, the aperture sto may be placed on a virtual plane that is in contact with the vertex of the object-side surface S3.

According to an embodiment, the image sensor IS may include an imaging surface img where at least some of the light focused through the aperture sto and/or the lenses L1, L2, L3, and L4 is received and an image is formed. According to an embodiment, the image sensor IS may be a sensor mounted on a circuit board or the like to be aligned with the optical axis, and may react to light. The image sensor IS may include, for example, a sensor such as a complementary metal-oxide semiconductor (CMOS) or a charge-coupled device (CCD). Without being limited to these, the image sensor IS may include various elements configured to convert, for example, an object image, into an electric image signal. The image sensor IS may acquire an image of the object by detecting contrast information, gradation ratio information, color information, and the like about the object from light that has passed through the plurality of lenses.

According to an embodiment, the lens assembly 400 may further include an infrared cut-off filter F. According to an embodiment, the infrared cut-off filter F may be disposed between the image sensor IS and the fourth lens L4 of the lens group. According to an embodiment, the infrared cut-off filter F may include the object-side surface S11 facing the object O and the image-side surface S12 facing the image sensor IS. For example, the infrared cut-off filter F may block light (e.g., infrared rays) in a wavelength band that is not discernible to a user's naked eye but is detected by a film or an image sensor IS. For example, in a lens assembly or electronic device 101 for detecting infrared rays, the infrared cut-off filter F may be replaced with a pass filter that transmits infrared rays and blocks visible rays. For example, the infrared cut-off filter F may be aligned with the plurality of lenses L1, L2, L3, and L4, the aperture sto, and/or the image sensor IS of the lens group along the optical axis O-I.

The radius, effective focal length (f), total track length (TTL), surface distance (SD), or thickness of each of the lenses L1, L2, L3, and L4, the image height (IH) of the image sensor IS, and the like of the disclosure may all be in mm units unless otherwise specified. Additionally, the radius, effective focal length, TTL, SD, thickness of each of the lenses L1, L2, L3, and L4 or the IH of the image sensor IS may be a distance measured about the optical axis O-I.

Hereinafter, according to an embodiment, [Formulas 1 to 11] for implementing the lens assembly 400 as a bright wide-angle optical system with high pixels while being miniaturized and/or slimmed to be suitable for application to a hole-in-display (HID) are described.

According to an embodiment, the lens assembly 400 of FIG. 6A, the lens assembly 500 of FIG. 7A, the lens assembly 600 of FIG. 8A, the lens assembly 700 of FIG. 9A, and the lens assembly 800 of FIG. 10A, which will be described later with reference to FIGS. 6A to 10D, may also satisfy the following [Formulas 1 to 11].

According to an embodiment, the lens assemblies 400, 500, 600, 700, and 800 may satisfy [Formula 1] below.

$$[\text{Formula 1}]:$$

$$\text{IH} \geq 2.8 \text{ mm}$$

Here, the image height (IH) may be half of the diagonal length of the image sensor IS.

IH in [Formula 1] may represent the size of the image sensor IS. In the embodiments of the disclosure, when applying a high-pixel image sensor IS which has the IH of about 2.8 mm or more and satisfies [Formula 1], it may be relatively difficult to implement a bright (e.g., small F number or Fno) optical system with a short (slim) total length and to control aberration compared to the case where the IH is less than about 2.8 mm. For example, when the IH of [Formula 1] is less than about 2.8 mm, it may be relatively advantageous to implement a slim and bright optical system compared to the case where the IH is about 2.8 mm or more.

According to an embodiment, the lens assemblies 400, 500, 600, 700, and 800 may satisfy [Formula 2] below.

$$[\text{Formula 2}]:$$

$$\text{TTL-ASL} \leq 0.01 \text{ mm}$$

Here, the total track length (TTL) is the distance from the object side surface S3 of the first lens L1 to the imaging surface img of the image sensor IS, and the aperture stop length (ASL) may be the distance from the aperture sto to the imaging surface img of the image sensor IS.

TTL-ASL in [Formula 2] may define the position of the aperture sto in the lens assembly. According to an embodiment, when the ASL is greater than the TTL in [Formula 2] (or when the TTL-ASL is about 0.01 or less), it may contribute to reducing the size of the through hole (e.g., the through hole 351 in FIG. 1) of the display (e.g., the display 301 in FIG. 5) of the electronic device (e.g., the electronic device 101 in FIGS. 1, 3, and 4). In contrast, when the ASL is smaller than TTL in [Formula 2] (or when TTL-ASL is greater than about 0.01), there may be a limit to reducing the size of the through hole 341, and the exterior design of the electronic device 101 may be spoiled.

According to an embodiment, the lens assemblies 400, 500, 600, 700, and 800 may satisfy [Formula 3] below.

$$[\text{Formula 3}]:$$

$$L2MED/L1S1ED \leq 1.05$$

In [Formula 3], L1S1ED may be the effective diameter of the object-side surface S3 of the first lens L1, L2MED may be the larger value between the effective diameter of the object-side surface S5 of the second lens L2 and the effective diameter of the image-side surface S6 of the second lens L2.

L2MED/L1S1ED of [Formula 3] may define the relative size of the second lens L2 with respect to the first lens L1. According to an embodiment, when L2MED/L1S1ED in [Formula 3] is about 1.05 or less, the lens assembly may be miniaturized and/or slimmed to be suitable for provision as a hole-in-display (HID) camera. For example, when L2MED/L1S1ED in [Formula 3] is greater than about 1.05, it may be difficult to place at least a portion of the first lens L1 and the second lens L2 of the lens assembly in the through hole (e.g., the through hole 341 in FIG. 5) of the display (e.g., the display 301 in FIG. 5) due to the large effective diameter of the second lens L2.

In other words, when the diameter of the second lens L2 is larger than the diameter of the through hole (e.g., the through hole 341 in FIG. 5) of the display (e.g., the display 301 in FIG. 5), it may be difficult to place the first and second lenses L1 and L2 of the lens assembly in the through hole 341. Alternatively, when the diameter of the through hole 341 is expanded beyond the diameter of the second lens L2, the size of the through hole visible on the display 301 may increase, which may spoil the aesthetics or design of the electronic device (e.g., the electronic device 101 of FIGS. 3 and 4).

According to an embodiment, the lens assemblies 400, 500, 600, 700, and 800 may satisfy [Formula 4] below.

$$[\text{Formula 4}]:$$

$$f/EPD \leq 2.5$$

Here, the focal length (f) may the composite focal length of the lens assembly 400, 500, 600, 700, or 800, and the entrance pupil diameter (EPD) may be the entrance pupil.

According to an embodiment, when f/EPD in [Formula 4] is greater than about 2.5, the limiting resolution may be lowered, whereby the overall performance of the optical system may deteriorate compared to the case where f/EPD is about 2.5 or less, and the optical system may become a relatively dark (e.g., F number or Fno-increased) optical system.

According to an embodiment, the lens assemblies 400, 500, 600, 700, and 800 may satisfy [Formula 5] below.

$$[\text{Formula 5}]:$$

$$17 < V2 < 25$$

Here, V2 may be the Abbe number of the second lens L2 at a wavelength of 587.6 nm.

V2 in [Formula 5] may define the Abbe number condition for implementing an optical system with improved chromatic aberration control performance. According to an embodiment, when V2 in [Formula 5] is about 25 or more or about 17 or less, it may be difficult to ensure the image quality of the optical system due to an increase in chromatic aberration, especially longitudinal chromatic aberration.

According to an embodiment, the lens assemblies 400, 500, 600, 700, and 800 may satisfy [Formula 6] below.

$$[\text{Formula 6}]:$$

$$N2 \geq 1.66$$

Here, N2 may be the refractive index of the second lens L2 at a wavelength of 587.6 nm.

[Formula 6] may define the refractive index conditions for implementing a miniaturized optical system with improved chromatic aberration. According to an embodiment, when N2 in [Formula 6] is less than about 1.66, the field of view of the optical system may be reduced, but it may become difficult to control the aberrations of the lenses L1, L2, L3, and L4 and optimize the performance of the lenses (e.g., modulation transfer function (MTF)), and the total length of the lens assembly may become longer, which may go against the demand for miniaturization of the optical system.

According to an embodiment, the lens assemblies 400, 500, 600, 700, and 800 may satisfy [Formula 7] below.

[Formula 7]:

$$N1 \leq 1.6$$

Here, N1 may be the refractive index of the first lens L1 at a wavelength of 587.6 nm.

According to an embodiment, the refractive index conditions defined by [Formula 7] may define conditions for implementing a lens assembly with improved aberration. For example, when N1 in [Formula 7] exceeds about 1.6, it may be disadvantageous to improve the aberration of the optical system.

According to an embodiment, the lens assemblies 400, 500, 600, 700, and 800 may satisfy [Formula 8] below.

[Formula 8]:

$$N4 \leq 1.6$$

Here, N4 may be the refractive index of the fourth lens L4 at a wavelength of 587.6 nm.

According to an embodiment, the refractive index conditions defined by [Formula 8] may define conditions for implementing a lens assembly with improved aberration. For example, when N4 in [Formula 9] exceeds about 1.6, it may be disadvantageous to improve the aberration of the optical system.

According to an embodiment, the lens assemblies 400, 500, 600, 700, and 800 may satisfy [Formula 9] below.

[Formula 9]:

$$CT2 \geq 0.15 \text{ mm}$$

Here, CT2 may be the central thickness of the second lens L2. For example, CT2 may be measured with reference to the optical axis O-I.

According to an embodiment, CT2 in [Formula 9] may define the slimming condition of the optical system. For example, when CT2 in [Formula 9] is less than about 0.15 mm, it may be difficult to ensure a slimming characteristic of the optical system.

According to an embodiment, the lens assemblies 400, 500, 600, 700, and 800 may satisfy [Formula 10] below.

[Formula 10]:

$$SD/TTL \leq 0.9$$

Here, the surface distance (SD) is the distance from the object-side surface S3 of the first lens L1 to the image-side surface S10 of the fourth lens L4, and the total track length (TTL) may be the distance from the object-side surface S3 of the first lens L1 to the imaging surface img of the image sensor IS.

[Formula 10] may define the conditions for implementing a slimmed optical system with a reduced total length. According to an embodiment, when SD/TTL in [Formula 10] is greater than about 0.9, the value of SD may be unsuitable for mass production of the lens assembly, and, for example, manufacturing of the lens assembly may not be possible.

According to an embodiment, the lens assemblies 400, 500, 600, 700, and 800 may satisfy [Formula 11] below.

[Formula 11]:

$$1.0 < TTL/f$$

Here, TTL may be the distance from the object-side surface S3 of the first lens L1 to the imaging surface img of the image sensor IS, and f is the composite focal distance of the lens assembly 400, 500, 600, 700, or 800.

TTL/f in [Formula 11] may define conditions for implementing a wide-angle camera (or optical system). For example, when the TTL/f in [Formula 11] is about 1.0 or less, the field angle becomes smaller and is suitable for a telephoto camera, but may not be suitable for implementing a wide-angle camera.

[Table 1] below represents numerical values of IH in [Formula 1], TTL-ASL in [Formula 2], L2MED/L1S1ED in [Formula 3], f/EPD in [Formula 4], V2 in [Formula 5], N2 in [Formula 6], and N1 in [Formula 7] of the lens assemblies 400, 500, 600, 700, and 800 according to [Example 1] and [Examples 2 to 5], which will be described later with reference to FIGS. 7A to 10D. Referring to [Table 1], it can be seen that the lens assemblies 400, 500, 600, 700, and 800 according to [Examples 1 to 5] satisfy the above-mentioned [Formulas 1 to 7].

[Table 1]

|  | Example 1 | Example 2 | Example 3 | Example 4 | Example 5 |
|---|---|---|---|---|---|
| Formula 1 | 2.935 | 2.8 | 2.856 | 2.8 | 2.935 |
| Formula 2 | 0 | 0 | 0 | 0 | 0 |
| Formula 3 | 0.95 | 0.96 | 0.99 | 0.99 | 0.95 |
| Formula 4 | 2.25 | 2.25 | 2.25 | 2.25 | 2.25 |
| Formula 5 | 1.21 | 1.24 | 1.24 | 1.21 | 1.23 |

In an embodiment, the lens assembly 400 may be manufactured to satisfy the conditions presented through the shapes of the above-described lenses L1, L2, L3, and L4 (e.g., lens surface) and the above-described [Formulas 1 to 11] and to have the specifications exemplified in [Table 2]. In [Table 2], lens surface 1 may exemplify the gap between the first lens L1 and the object O, and the measured value of its thickness may be the distance of the gap or the air gap.

The lens assembly 400 implemented with the specifications of [Table 2] below may be a wide optical system having a focal length (f) of about 3.41 mm, an F-number (Fno) of about 2.25, and a field of view ("FOV") of about 80 degrees.

[Table 2]

| Lens surface (Surface) | Radius of curvature (Radius) | Thickness | Refractive index (Nd) | Abbe Number (Vd) | Effective diameter |
|---|---|---|---|---|---|
| Object (O) | infinity | 400 |  |  |  |
| 1 | infinity | 0.330 |  |  |  |
| Aperture (sto) | infinity | 0.000 |  |  |  |
| 3 | 1.496 | 0.762 | 1.54401 | 55.91 | 0.761 |
| 4 | -6.884 | 0.020 |  |  | 0.719 |
| 5 | 40.679 | 0.200 | 1.67073 | 19.23 | 0.706 |
| 6 | 3.597 | 0.383 |  |  | 0.720 |
| 7 | -2.436 | 0.941 | 1.53500 | 55.75 |  |
| 8 | -1.529 | 0.589 |  |  |  |
| 9 | 1.702 | 0.310 | 1.53500 | 55.75 |  |
| 10 | 0.809 | 0.271 |  |  |  |
| 11 | infinity | 0.110 | 1.51680 | 64.20 |  |
| 12 | infinity | 0.529 |  |  |  |
| mg | infinity | 0.025 |  |  |  |

[Table 3] and [Table 4] below represent the aspheric coefficients of the lenses L1, L2, L3, and L4, and the aspherical coefficients may be calculated through the following [Equation 1].

[Equation 1]

$$x = \frac{(y^2/R)}{1 + \sqrt{(1 - (1+K)(y/R)^2)}} + \sum_{i}(A_i)(y^i)$$

Here, "x" may refer to the distances from the vertex of each of the lenses L1, L2, L3, and L4 in the optical axis O-I direction, "y" may refer to the distance in the direction perpendicular to the optical axis O-I, "R" may refer to the radius of curvature at the vertex of each of the lenses L1, L2, L3, and L4), "K" may refer to the conic coefficient, and "$A_i$" may refer to the aspheric coefficient. In the disclosure, the aspheric coefficients "$A_4$", "$A_6$", "$A_8$", "$A_{10}$", "$A_{12}$", "$A_{14}$", "$A_{16}$", "$A_{18}$", "$A_{20}$", "$A_{22}$", "$A_{24}$", "$A_{26}$", "$A_{28}$", and "$A_{30}$" may be sequentially indicated as "A", "B", "C", "D", "E", "F", "G", "H", "J", "K", "L", "M", "N", and "O". For example, E+01 may represent $10^1$, and E-02 may represent $10^{-2}$. The radius of curvature (R) may represent, for example, a value indicating the degree of curvature at each point of a curved surface or curved line.

[Table 3]

| Lens surface (Surface) | S3 | S4 | S5 | S6 |
|---|---|---|---|---|
| K(Conic) | 1.6475E+00 | -9.9895E+01 | 9.7198E+01 | -9.8220E+00 |
| A(4th)/C4 | -5.6684E-02 | -4.1622E-02 | 2.0699E-02 | 5.6117E-02 |
| B(6th)/C5 | -7.4972E-03 | -9.6253E-04 | 5.6732E-04 | 2.3626E-03 |
| C(8th)/C6 | -1.3035E-03 | 2.4928E-04 | 8.5288E-04 | 9.1983E-04 |
| D(10th)/C7 | -1.7307E-04 | -5.4603E-04 | -4.0304E-04 | -3.1908E-05 |
| E(12th)/C8 | -5.0243E-05 | 1.8292E-04 | 8.6724E-05 | 1.6102E-05 |
| F(14th)/C9 | -6.4899E-06 | -2.8529E-05 | 1.4387E-05 | 1.5962E-05 |
| G(16th)/C10 | -7.1160E-06 | -4.0119E-05 | -1.2868E-05 | -2.4702E-06 |
| H(18th)/C11 | 3.1267E-06 | 3.9932E-06 | 6.8855E-06 | -1.7101E-06 |
| J(20th)/C12 | -8.3853E-07 | -1.0989E-05 | -6.3171E-06 | -1.6204E-06 |
| K(22nd)/C13 | 1.2723E-06 | 2.5583E-06 | 1.4925E-06 | -4.0122E-06 |
| L(24th)/C14 | -5.2502E-07 | -1.8247E-05 | 2.1740E-07 | -2.8623E-06 |
| M(26th)/C15 | -2.2898E-06 | -4.1788E-06 | 0.0000E+00 | 5.7914E-06 |
| N(28th)/C16 | 0.0000E+00 | -2.2990E-06 | 0.0000E+00 | 1.7101E-06 |
| O(30th)/C17 | 0.0000E+00 | 1.4819E-06 | 0.0000E+00 | -2.7610E-06 |

[Table 4]

| Lens surface (Surface) | S7 | S8 | S9 | S10 |
|---|---|---|---|---|
| K(Conic) | 2.6607E+00 | -6.3330E+00 | -1.7108E+01 | -3.7505E+00 |
| A(4th)/C4 | -4.6354E-02 | -2.6648E-01 | -1.3984E+00 | -1.9157E+00 |
| B(6th)/C5 | -3.2020E-03 | 7.2264E-02 | 5.0911E-01 | 3.5470E-01 |
| C(8th)/C6 | -2.7260E-04 | -5.7005E-04 | -1.3703E-01 | -1.1783E-01 |
| D(10th)/C7 | 3.5775E-04 | -1.2187E-03 | 2.3173E-02 | 5.2461E-02 |
| E(12th)/C8 | 2.1786E-06 | -2.7071E-03 | -6.4191E-03 | -2.6241E-02 |
| F(14th)/C9 | 1.9642E-04 | -1.5882E-04 | 7.0487E-03 | 1.2413E-02 |
| G(16th)/C10 | 4.1319E-05 | 4.1712E-05 | -2.3377E-03 | -1.5129E-03 |
| H(18th)/C11 | 7.6738E-05 | -1.2261E-04 | -8.2523E-04 | 4.4881E-03 |
| J(20th)/C12 | 1.0621E-05 | -2.7699E-04 | 4.7913E-04 | -9.2229E-04 |
| K(22nd)/C13 | 4.8774E-05 | -1.6491E-04 | 4.4177E-04 | 1.3160E-03 |
| L(24th)/C14 | 1.3711E-05 | -6.8369E-05 | -2.9627E-04 | 3.1692E-04 |
| M(26th)/C15 | 3.4984E-05 | -1.3356E-05 | -1.0512E-04 | 6.9857E-04 |
| N(28th)/C16 | 7.5957E-07 | -3.1258E-05 | 1.5505E-04 | 1.6313E-04 |
| O(30th)/C17 | 1.6293E-05 | -5.2410E-05 | -2.0681E-05 | 6.0145E-05 |

FIG. 6B is a graph showing the spherical aberrations of the lens assembly 400 according to an embodiment of the disclosure, in which the horizontal axis represents the coefficient of longitudinal spherical aberration, and the vertical axis represents the normalized distance from the optical axis O-I and shows the change in longitudinal spherical aberration depending on the wavelength of light. The longitudinal spherical aberrations are represented for light beams with wavelengths of, for example, 656.3000 (nanometer (NM)), 587.6000 (NM), 546.1000 (NM), 486.1000 (NM), and 435.8000 (NM), respectively. FIG. 6C is a graph showing the astigmatic field curves of the lens assembly 400 according to an embodiment of the disclosure for light with a wavelength of 546.1000 (NM), in which "S" exemplifies a sagittal plane, and "T" exemplifies a tangential plane or meridional plane. FIG. 6D is a graph showing the distortion of the lens assembly 400 according to an embodiment of the disclosure for light with a wavelength of 546.1000 (NM).

[Example 2]

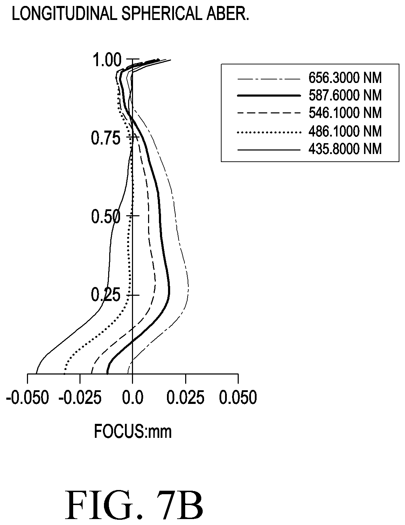

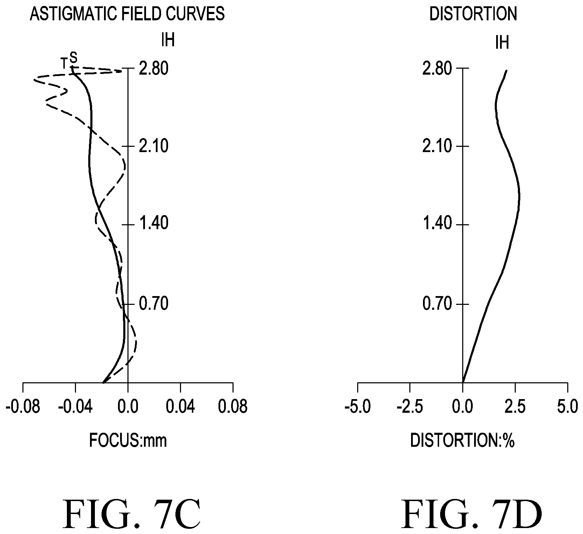

FIG. 7A is a view illustrating the configuration of a lens assembly according to an embodiment disclosed herein. FIG. 7B is a graph showing spherical aberrations of the lens assembly of FIG. 7A according to an embodiment disclosed herein. FIG. 7C is a graph showing the astigmatic field curves of the lens assembly of FIG. 7A according to an embodiment disclosed herein. FIG. 7D is a graph showing the distortion aberration of the lens assembly of FIG. 7A according to an embodiment disclosed herein.

In the disclosure, the configuration of the lens assembly 500 according to the embodiment of FIGS. 7A to 7D may be at least partially the same or similar to the configuration of the lens assembly 400 according to the embodiment of FIGS. 6A to 6D. The descriptions of the first lens L1, the second lens L2, the third lens L3, and/or the fourth lens L4 of the lens assembly 400, the aperture sto, and/or the image sensor IS according to the embodiment of FIGS. 6A to 6D may be equally applicable to the first lens L1, the second lens L2, the third lens L3, and/or the fourth lens L4 of the lens assembly 400, the aperture sto, and/or the image sensor IS according to the embodiment of FIGS. 7A to 7D.

The lens assembly 500 according to the embodiment of FIGS. 7A to 7D may satisfy [Formulas 1 to 11] described above in the embodiment of FIGS. 6A to 6D.

In an embodiment, the lens assembly 500 may be manufactured with the specifications exemplified in the following [Table 5], and may have aspherical coefficients of [Table 6] and [Table 7]. In [Table 5], lens surface 1 may exemplify the gap between the first lens L1 and the object O, and the measured value of its thickness may be the distance of the gap or the air gap.

The lens assembly 500 implemented with the specifications of [Table 5] below may be a wide optical system having a focal length (f) of about 3.24 mm, an F-number (Fno) of about 2.25, and a field of view (FOV) of about 80 degrees.

[Table 5]

| Lens surface (Surface) | Radius of curvature (Radius) | Thickness | Refractive index (Nd) | Abbe Number (Vd) | Effective diameter |
|---|---|---|---|---|---|
| Object (O) | infinity | 400 | | | |
| 1 | infinity | 0.330 | | | |
| Aperture (sto) | infinity | 0.000 | | | |
| 3 | 1.362 | 0.750 | 1.54401 | 55.91 | 0.723 |
| 4 | -72.484 | 0.086 | | | 0.672 |
| 5 | -7.233 | 0.200 | 1.67073 | 19.23 | 0.673 |
| 6 | 71.647 | 0.359 | | | 0.697 |
| 7 | -2.432 | 1.065 | 1.53500 | 55.75 | |
| 8 | -1.811 | 0.116 | | | |
| 9 | 1.073 | 0.394 | 1.53500 | 55.75 | |
| 10 | 0.651 | 0.300 | | | |
| 11 | infinity | 0.110 | 1.51680 | 64.20 | |
| 12 | infinity | 0.621 | | | |
| img | infinity | 0.020 | | | |

[Table 6] and [Table 7] below describe the aspherical coefficients of the lenses L1, L2, L3, and L4 of the lens assembly 500, and the aspherical coefficients may be calculated through [Equation 1] described above with reference to [Table 3] and [Table 4].

[Table 6]

| Lens surface (Surface) | S3 | S4 | S5 | S6 |
|---|---|---|---|---|
| K(Conic) | 1.5747E+00 | -4.9213E+01 | 3.0663E+00 | 7.1210E+01 |
| A(4th)/C4 | -5.5044E-02 | -5.0018E-02 | 9.8964E-03 | 6.9770E-02 |
| B(6th)/C5 | -7.8071E-03 | 4.5070E-04 | 3.3490E-03 | 4.7707E-03 |
| C(8th)/C6 | -1.5167E-03 | -5.6572E-05 | -4.5094E-06 | 7.3017E-04 |
| D(10th)/C7 | -2.5213E-04 | -9.1224E-05 | -1.4929E-04 | -5.9243E-05 |
| E(12th)/C8 | -9.5700E-05 | -1.2206E-05 | 1.1658E-05 | 6.4454E-05 |
| F(14th)/C9 | -2.6674E-06 | 1.7129E-05 | -5.4735E-08 | -3.3836E-05 |
| G(16th)/C10 | -1.0813E-05 | -9.0082E-06 | -8.0304E-07 | 1.6673E-05 |
| H(18th)/C11 | 2.1817E-06 | 2.9987E-06 | 7.8761E-07 | -1.7412E-05 |
| J(20th)/C12 | -3.8085E-06 | -4.9938E-06 | -2.9807E-06 | 7.3752E-06 |
| K(22nd)/C13 | 1.0914E-06 | 1.9231E-06 | 1.8343E-06 | -9.7603E-06 |
| L(24th)/C14 | -5.2108E-06 | 1.1154E-06 | 6.9757E-08 | -8.8778E-07 |
| M(26th)/C15 | 5.1845E-06 | 3.5411E-06 | 0.0000E+00 | -5.5002E-06 |
| N(28th)/C16 | 0.0000E+00 | -5.7769E-06 | 0.0000E+00 | 9.4243E-07 |
| O(30th)/C17 | 0.0000E+00 | 2.0654E-06 | 0.0000E+00 | -2.4310E-06 |

[Table 7]

| Lens surface (Surface) | S7 | S8 | S9 | S10 |
|---|---|---|---|---|
| K(Conic) | 4.6474E+00 | -1.0621E-01 | -1.5963+01 | -4.6790E+00 |
| A(4th)/C4 | -5.3686E-02 | -4.0505E-01 | -1.3751E+00 | -1.4606E+00 |
| B(6th)/C5 | -1.0115E-02 | 1.0440E-01 | 5.3610E-01 | 2.6283E-01 |
| C(8th)/C6 | 2.9725E-04 | -1.7350E-02 | -1.6744E-01 | -8.5441E-02 |
| D(10th)/C7 | 4.3356E-04 | 1.7264E-02 | 3.0445E-02 | 3.3336E-02 |
| E(12th)/C8 | 4.4048E-04 | -1.1284E-02 | -8.7621E-03 | -2.5203E-02 |
| F(14th)/C9 | 2.2617E-04 | 9.3546E-04 | 1.7978E-02 | 3.8214E-03 |
| G(16th)/C10 | 1.6850E-04 | -2.2295E-03 | -7.0206E-03 | -3.7294E-03 |
| H(18th)/C11 | 1.0394E-04 | 1.8383E-03 | 8.2479E-04 | 2.2033E-03 |
| J(20th)/C12 | 6.2207E-05 | 3.0118E-04 | -1.3368E-03 | 2.0889E-04 |
| K(22nd)/C13 | 3.7490E-05 | 7.3356E-04 | 3.3801E-04 | 1.2264E-03 |
| L(24th)/C14 | 1.7618E-05 | 8.0541E-05 | -9.1214E-04 | 2.2480E-04 |
| M(26th)/C15 | 7.4954E-06 | 1.3621E-04 | 7.1901E-04 | 2.9334E-04 |
| N(28th)/C16 | -1.1008E-07 | -1.2475E-05 | 3.5305E-04 | -6.2241E-05 |
| O(30th)/C17 | 1.4726E-06 | 8.2243E-06 | 2.1491E-04 | -1.2905E-04 |

FIG. 7B is a graph showing the spherical aberrations of the lens assembly 500 according to an embodiment of the disclosure, in which the horizontal axis represents the coefficient of longitudinal spherical aberration, and the vertical axis represents the normalized distance from the optical axis O-I and shows the change in longitudinal spherical aberration depending on the wavelength of light. The longitudinal spherical aberrations are represented for light beams with wavelengths of, for example, 656.3000 (nanometer (NM)), 587.6000 (NM), 546.1000 (NM), 486.1000 (NM), and 435.8000 (NM), respectively. FIG. 7C is a graph showing the astigmatic field curves of the lens assembly 500 according to an embodiment of the disclosure for light with a wavelength of 546.1000 (NM), in which "S" exemplifies a sagittal plane, and "T" exemplifies a tangential plane or meridional plane. FIG. 7D is a graph showing the distortion of the lens assembly 500 according to an embodiment of the disclosure for light with a wavelength of 546.1000 (NM).

[Example 3]

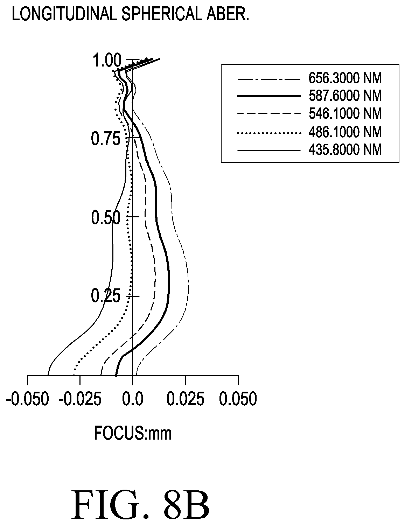

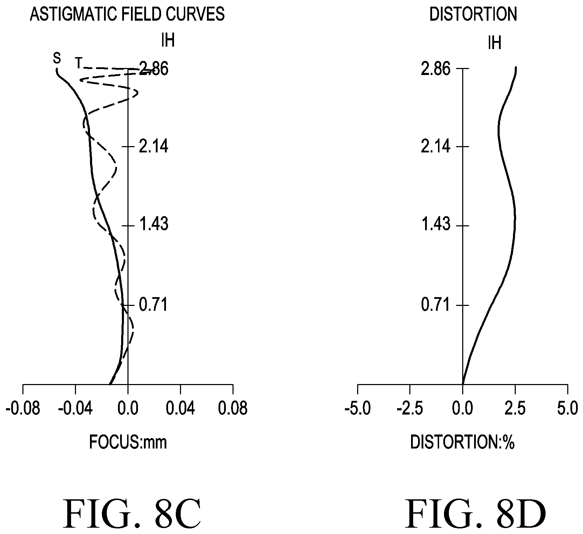

FIG. 8A is a view illustrating the configuration of a lens according to an embodiment disclosed herein. FIG. 8B is a graph showing the spherical aberrations of the lens assembly of FIG. 8A according to an embodiment disclosed herein. FIG. 8C is a graph showing the astigmatic field curves of the lens assembly of FIG. 8A according to an embodiment disclosed herein. FIG. 8D is a graph showing the distortion aberration of the lens assembly of FIG. 8A according to an embodiment disclosed herein.

In the disclosure, the configuration of the lens assembly 600 according to the embodiment of FIGS. 8A to 8D may be at least partially the same or similar to the configuration of the lens assembly 400 according to the embodiment of FIGS. 6A to 6D. The descriptions of the first lens L1, the second lens L2, the third lens L3, and/or the fourth lens L4 of the lens assembly 400, the aperture sto, and/or the image sensor IS according to the embodiment of FIGS. 6A to 6D may be equally applicable to the first lens L1, the second lens L2, the third lens L3, and/or the fourth lens L4 of the lens assembly 600, the aperture sto, and/or the image sensor IS according to the embodiment of FIGS. 8A to 8D.

The lens assembly 600 according to the embodiment of FIGS. 8A to 8D may satisfy [Formulas 1 to 11] described above in the embodiment of FIGS. 6A to 6D.

In an embodiment, the lens assembly 600 may be manufactured with the specifications exemplified in the following [Table 8], and may have aspherical coefficients of [Table 9] and [Table 10]. In [Table 8], lens surface 1 may exemplify the gap between the first lens L1 and the object O, and the measured value of its thickness may be the distance of the gap or the air gap.

The lens assembly 600 implemented with the specifications of [Table 8] below may be a wide optical system having a focal length (f) of about 3.23 mm, an F-number (Fno) of about 2.25, and a field of view (FOV) of about 81 degrees.

[Table 8]

| Lens surface (Surface) | Radius of curvature (Radius) | Thickness | Refractive index (Nd) | Abbe Number (Vd) | Effective diameter |
|---|---|---|---|---|---|
| Object (O) | infinity | 400 | | | |
| 1 | infinity | 0.330 | | | |
| Aperture (sto) | infinity | 0.000 | | | |
| 3 | 1.384 | 0.742 | 1.54401 | 55.91 | 0.722 |
| 4 | -65.549 | 0.088 | | | 0.671 |
| 5 | -8.225 | 0.200 | 1.67073 | 19.23 | 0.676 |
| 6 | 28.218 | 0.377 | | | 0.718 |
| 7 | -2.583 | 1.052 | 1.53500 | 55.75 | |
| 8 | -1.802 | 0.119 | | | |
| 9 | 1.060 | 0.389 | 1.53500 | 55.75 | |
| 10 | 0.644 | 0.306 | | | |
| 11 | infinity | 0.110 | 1.51680 | 64.20 | |
| 12 | infinity | 0.621 | | | |
| Imaging surface (img) | infinity | 0.015 | | | |

[Table 9] and [Table 10] below describe the aspherical coefficients of the lenses L1, L2, L3, and L4 of the lens assembly 600, and the aspherical coefficients may be calculated through [Equation 1] described above with reference to [Table 3] and [Table 4].

[Table 9]

| Lens surface (Surface) | S3 | S4 | S5 | S6 |
|---|---|---|---|---|
| K(Conic) | 1.5614E+00 | 1.8987E+01 | 1.1741E+01 | -6.1829E 01 |
| A(4th)/C4 | -5.0276E-02 | -4.5324E-02 | 8.2150E-03 | 6.5263E-02 |

(continued)

| Lens surface (Surface) | S3 | S4 | S5 | S6 |
|---|---|---|---|---|
| B(6th)/C5 | -6.6455E-03 | 1.8238E-04 | 3.0392E-03 | 4.4970E-03 |
| C(8th)/C6 | -1.2331E-03 | 1.2920E-05 | 9.1148E-05 | 6.3830E-04 |
| D(10th)/C7 | -1.7344E-04 | -1.1762E-04 | -1.9603E-04 | -1.3157E-04 |
| E(12th)/C8 | -6.9982E-05 | 2.1752E-05 | 6.3801E-05 | 1.1030E-04 |
| F(14th)/C9 | 2.3452E-06 | 9.2379E-06 | -6.9503E-06 | -2.9628E-05 |
| G(16th)/C10 | -1.0115E-05 | -3.6655E-06 | 2.6934E-06 | 1.9241E-05 |
| H(18th)/C11 | 1.6410E-06 | -1.2702E-06 | -3.4963E-06 | -1.7692E-05 |
| J(20th)/C12 | -2.4203E-06 | -2.9233E-06 | 6.5065E-07 | 1.0162E-05 |
| K(22nd)/C13 | 1.3721E-06 | -1.0276E-06 | -2.2905E-06 | -9.1819E-06 |
| L(24th)/C14 | -3.1869E-06 | 1.3679E-06 | 1.5947E-06 | 1.1429E-06 |
| M(26th)/C15 | 6.1680E-06 | 4.5960E-06 | 0.0000E+00 | -1.4996E-06 |
| N(28th)/C16 | 0.0000E+00 | -3.1502E-06 | 0.0000E+00 | 4.0703E-06 |
| O(30th)/C17 | 0.0000E+00 | 5.7923E-08 | 0.0000E+00 | -1.2807E-06 |

[Table 10]

| Lens surface (Surface) | S7 | S8 | S9 | S10 |
|---|---|---|---|---|
| K(Conic) | 5.2656E+00 | -4.6831E-01 | -1.6353E+01 | -4.3239E+00 |
| A(4th)/C4 | -6.0090E-02 | -4.0396E-01 | -1.3631E+00 | -1.6570E+00 |
| B(6th)/C5 | -1.1268E-02 | 1.3531E-01 | 6.1667E-01 | 3.5711E-01 |
| C(8th)/C6 | -3.6989E-04 | -2.0243E-02 | -2.5208E-01 | -1.2368E-01 |
| D(10th)/C7 | -4.8188E-04 | 9.0435E-03 | 6.3118E-02 | 2.9251E-02 |
| E(12th)/C8 | -3.6943E-05 | -1.3988E-02 | -4.9898E-03 | -2.9550E-02 |
| F(14th)/C9 | 2.7147E-05 | 3.0690E-03 | 7.4572E-03 | 1.0546E-02 |
| G(16th)/C10 | 1.4490E-04 | -3.4682E-04 | -7.1126E-03 | -1.7823E-03 |
| H(18th)/C11 | 1.1465E-04 | 2.2681E-03 | 4.9025E-03 | 3.8577E-03 |
| J(20th)/C 12 | 8.6645E-05 | -3.5874E-04 | -1.7065E-03 | 8.9756E-05 |
| K(22nd)/C13 | 5.6819E-05 | 2.3376E-04 | -5.0184E-04 | 1.1397E-03 |
| L(24th)/C14 | 4.2932E-05 | -1.3748E-04 | -3.9269E-04 | 5.1567E-05 |
| M(26th)/C15 | 2.5444E-05 | 2.1879E-04 | 5.6361E-04 | 1.3356E-04 |
| N(28th)/C16 | 1.2017E-05 | 6.6411E-05 | -2.2646E-04 | -2.6369E-04 |
| O(30th)/C17 | 8.6036E-06 | 7.3421E-05 | 8.7783E-05 | -1.9791E-04 |

FIG. 8B is a graph showing the spherical aberrations of the lens assembly 600 according to an embodiment of the disclosure, in which the horizontal axis represents the coefficient of longitudinal spherical aberration, and the vertical axis represents the normalized distance from the optical axis O-I and shows the change in longitudinal spherical aberration depending on the wavelength of light. The longitudinal spherical aberrations are represented for light beams with wavelengths of, for example, 656.3000 (nanometer (NM)), 587.6000 (NM), 546.1000 (NM), 486.1000 (NM), and 435.8000 (NM), respectively. FIG. 8C is a graph showing the astigmatic field curves of the lens assembly 600 according to an embodiment of the disclosure for light with a wavelength of 546.1000 (NM), in which "S" exemplifies a sagittal plane, and "T" exemplifies a tangential plane or meridional plane. FIG. 8D is a graph showing the distortion of the lens assembly 600 according to an embodiment of the disclosure for light with a wavelength of 546.1000 (NM).

[Example 4]

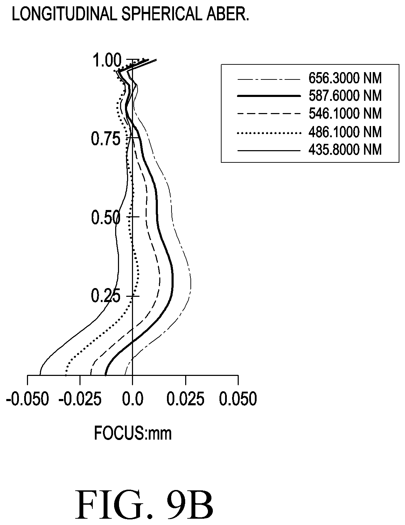

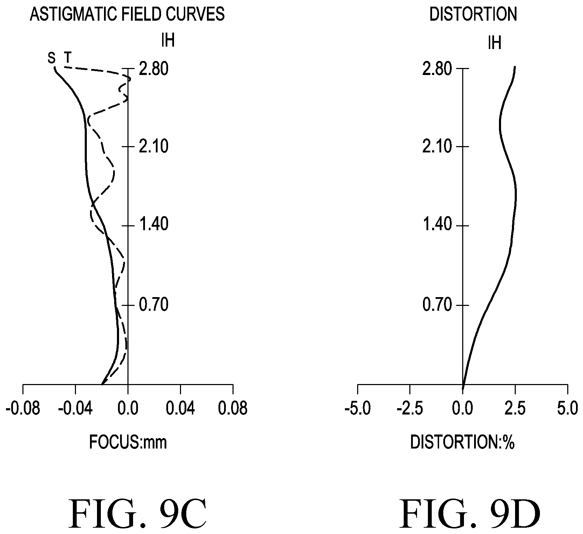

FIG. 9A is a view illustrating the configuration of a lens assembly according to an embodiment disclosed herein. FIG. 9B is a graph showing the spherical aberrations of the lens assembly of FIG. 9A according to an embodiment disclosed herein. FIG. 9C is a graph showing the astigmatic field curves of the lens assembly of FIG. 9A according to an embodiment disclosed herein. FIG. 9D is a graph showing the distortion aberration of the lens assembly of FIG. 9A according to an embodiment disclosed herein.

In the disclosure, the configuration of the lens assembly 700 according to the embodiment of FIGS. 9A to 9D may be at least partially the same or similar to the configuration of the lens assembly 400 according to the embodiment of FIGS. 6A to 6D. The descriptions of the first lens L1, the second lens L2, the third lens L3, and/or the fourth lens L4 of the lens assembly 400, the aperture sto, and/or the image sensor IS according to the embodiment of FIGS. 6A to 6D may be equally applicable to the first lens L1, the second lens L2, the third lens L3, and/or the fourth lens L4 of the lens assembly 700, the aperture sto, and/or the image sensor IS according to the embodiment of FIGS. 9A to 9D.

The lens assembly 700 according to the embodiment of FIGS. 9A to 9D may satisfy [Formulas 1 to 11] described above in the embodiment of FIGS. 6A to 6D.

In an embodiment, the lens assembly 700 may be manufactured with the specifications exemplified in [Table 11], and may have aspherical coefficients of [Table 12] and [Table 13]. In [Table 11], lens surface 1 may exemplify the gap between the first lens L1 and the object O, and the measured value of its thickness may be the distance of the gap or the air gap.

The lens assembly 700 implemented with the specifications of [Table 11] below may be a wide optical system having a focal length (f) of about 3.32 mm, an F-number (Fno) of about 2.25, and a field of view (FOV) of about 80 degrees.

[Table 11]

| Lens surface (Surface) | Radius of curvature (Radius) | Thickness | Refractive index (Nd) | Abbe Number (Vd) | Effective diameter |
|---|---|---|---|---|---|
| Object (O) | infinity | 400 | | | |
| 1 | infinity | 0.330 | | | |
| Aperture (sto) | infinity | 0.000 | | | |
| 3 | 1.372 | 0.747 | 1.54401 | 55.91 | 0.720 |
| 4 | -34.130 | 0.090 | | | 0.669 |
| 5 | -6.273 | 0.200 | 1.67073 | 19.23 | 0.671 |
| 6 | 1478.401 | 0.366 | | | 0.711 |
| 7 | -2.504 | 1.073 | 1.53500 | 55.75 | |
| 8 | -1.826 | 0.106 | | | |
| 9 | 1.081 | 0.390 | 1.53500 | 55.75 | |
| 10 | 0.657 | 0.300 | | | |
| 11 | infinity | 0.110 | 1.51680 | 64.20 | |
| 12 | infinity | 0.618 | | | |
| Imaging surface (img) | infinity | 0.020 | | | |

[Table 12] and [Table 13] below describe the aspherical coefficients of the lenses L1, L2, L3, and L4 of the lens assembly 700, and the aspherical coefficients may be calculated through [Equation 1] described above with reference to [Table 3] and [Table 4].

[Table 12]

| Lens surface (Surface) | S3 | S4 | S5 | S6 |
|---|---|---|---|---|
| K(Conic) | 1.5879E+00 | 3.5604E+01 | -4.2682E+00 | 9.9900E+01 |
| A(4th)/C4 | -5.3817E-02 | -4.8437E-02 | 1.1042E-02 | 6.7511E-02 |
| B(6th)/C5 | -7.3996E-03 | 4.1188E-04 | 3.4074E-03 | 4.3801E-03 |

(continued)

| Lens surface (Surface) | S3 | S4 | S5 | S6 |
|---|---|---|---|---|
| C(8th)/C6 | -1.4322E-03 | -1.3956E-04 | -7.6490E-05 | 6.0910E-04 |
| D(10th)/C7 | -2.1552E-04 | -8.9591E-05 | -1.7200E-04 | -1.4282E-04 |
| E(12th)/C8 | -8.3993E-05 | 6.5013E-06 | 6.0165E-05 | 1.3049E-04 |
| F(14th)/C9 | -1.0164E-06 | 2.7739E-05 | 7.5161E-06 | -2.3353E-05 |
| G(16th)/C10 | -1.1145E-05 | -1.5015E-05 | -3.2474E-06 | 2.7295E-05 |
| H(18th)/C11 | 4.5586E-06 | 5.7484E-06 | -2.6472E-07 | -1.8166E-05 |
| J(20th)/C12 | -2.8535E-06 | -7.4422E-06 | -3.0396E-06 | 1.3809E-05 |
| K(22nd)/C13 | 1.7918E-06 | 3.3752E-06 | -8.4308E-07 | -9.7939E-06 |
| L(24th)/C14 | -2.9311E-06 | 2.5776E-07 | 2.0419E-06 | 2.8550E-06 |
| M(26th)/C15 | 6.6415E-06 | 4.6873E-06 | 0.0000E+00 | -1.7791E-06 |
| N(28th)/C16 | 0.0000E+00 | -6.2428E-06 | 0.0000E+00 | 3.8807E-06 |
| O(30th)/C17 | 0.0000E+00 | 1.2008E-06 | 0.0000E+00 | -2.3385E-06 |

[Table 13]

| Lens surface (Surface) | S7 | S8 | S9 | S10 |
|---|---|---|---|---|
| K(Conic) | 5.1152E+00 | -4.5134E-01 | -1.6973E+01 | -4.2091E+00 |
| A(4th)/C4 | -5.7248E-02 | -4.0481E-01 | -1.2681E+00 | -1.5796E+00 |
| B(6th)/C5 | -1.0566E-02 | 1.4228E-01 | 5.3108E-01 | 3.3165E-01 |
| C(8th)/C6 | -6.1615E-04 | -2.4052E-02 | -1.8535E-01 | -1.1409E-01 |
| D(10th)/C7 | -6.7328E-04 | 8.8915E-03 | 3.3196E-02 | 3.3623E-02 |
| E(12th)/C8 | -2.1401E-04 | -1.5134E-02 | -8.2114E-03 | -3.0057E-02 |
| F(14th)/C9 | -7.1475E-05 | 3.1705E-03 | 9.7536E-03 | 8.1026E-03 |
| G(16th)/C10 | 6.0553E-05 | -7.0770E-04 | -6.3948E-03 | -2.9360E-03 |
| H(18th)/C11 | 7.4026E-05 | 2.2822E-03 | 2.4589E-03 | 2.6421E-03 |
| J(20th)/C12 | 5.4138E-05 | -7.4592E-04 | 2.9901E-04 | -4.3814E-04 |
| K(22nd)/C13 | 4.5169E-05 | 1.9313E-04 | 6.1327E-04 | 1.2791E-03 |
| L(24th)/C14 | 3.2759E-05 | -1.3165E-04 | -1.0379E-03 | -9.7578E-05 |
| M(26th)/C15 | 2.2355E-05 | 2.0702E-04 | 5.8972E-04 | 4.1099E-04 |
| N(28th)/C16 | 1.0328E-05 | 9.2456E-06 | -1.8545E-04 | -1.6334E-04 |
| O(30th)/C17 | 1.0270E-05 | 5.0335E-05 | -1.0635E-04 | 4.6245E-05 |

FIG. 9B is a graph showing the spherical aberrations of the lens assembly 700 according to an embodiment of the disclosure, in which the horizontal axis represents the coefficient of longitudinal spherical aberration, and the vertical axis represents the normalized distance from the optical axis O-I and shows the change in longitudinal spherical aberration depending on the wavelength of light. The longitudinal spherical aberrations are represented for light beams with wavelengths of, for example, 656.3000 (nanometer (NM)), 587.6000 (NM), 546.1000 (NM), 486.1000 (NM), and 435.8000 (NM), respectively. FIG. 9C is a graph showing the astigmatic field curves of the lens assembly 700 according to an embodiment of the disclosure for light with a wavelength of 546.1000 (NM), in which "S" exemplifies a sagittal plane, and "T" exemplifies a tangential plane or meridional plane. FIG. 9D is a graph showing the distortion of the lens assembly 700 according to an embodiment of the disclosure for light with a wavelength of 546.1000 (NM).

[Example 5]

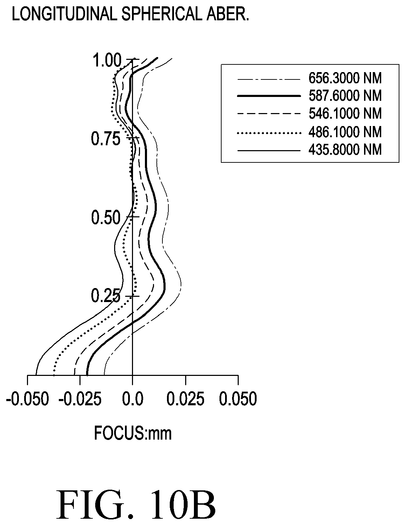

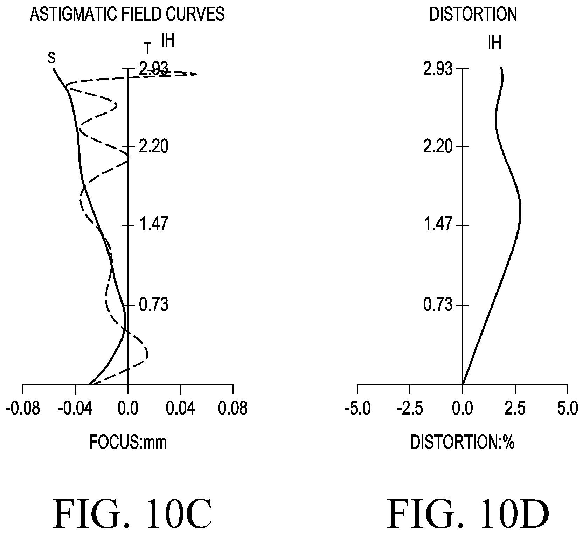

FIG. 10A is a view illustrating the configuration of a lens assembly according to an embodiment disclosed herein. FIG. 10B is a graph showing the spherical aberrations of the lens assembly of FIG. 10A according to an embodiment disclosed herein. FIG. 10C is a graph showing the astigmatic field curves of the lens assembly of FIG. 10A according to an embodiment disclosed herein. FIG. 10D is a graph showing the distortion aberration of the lens assembly of FIG. 10A according to an embodiment disclosed herein.

In the disclosure, the configuration of the lens assembly 800 according to the embodiment of FIGS. 10A to 10D may be at least partially the same or similar to the configuration of the lens assembly 400 according to the embodiment of FIGS. 6A to 6D. The descriptions of the first lens L1, the second lens L2, the third lens L3, and/or the fourth lens L4 of the lens assembly 400, the aperture sto, and/or the image sensor IS according to the embodiment of FIGS. 6A to 6D may be equally applicable to the first lens L1, the second lens L2, the third lens L3, and/or the fourth lens L4 of the lens assembly 800, the aperture sto, and/or the image sensor IS according to the embodiment of FIGS. 10A to 10D.

The lens assembly 800 according to the embodiment of FIGS. 10A to 10D may satisfy [Formulas 1 to 11] described above in the embodiment of FIGS. 6A to 6D.

In an embodiment, the lens assembly 800 may be manufactured with the specifications exemplified in the following [Table 14], and may have aspherical coefficients of [Table 15] and [Table 16]. In [Table 14], lens surface 1 may exemplify the gap between the first lens L1 and the object O, and the measured value of its thickness may be the distance of the gap or the air gap.

The lens assembly 800 implemented with the specifications of [Table 14] below may be a wide optical system having a focal length (f) of about 3.37 mm, an F-number (Fno) of about 2.25, and a field of view (FOV) of about 80 degrees.

[Table 14]

| Lens surface (Surface) | Radius of curvature (Radius) | Thickness | Refractive index (Nd) | Abbe Number (Vd) | Effective diameter |
|---|---|---|---|---|---|
| Object O | infinity | 400 | | | |
| 1 | infinity | 0.330 | | | |
| Aperture sto | infinity | 0.000 | | | |
| 3 | 1.459 | 0.758 | 1.54401 | 55.91 | 0.753 |
| 4 | -13.414 | 0.020 | | | 0.710 |
| 5 | 10.429 | 0.200 | 1.67073 | 19.23 | 0.699 |
| 6 | 3.344 | 0.376 | | | 0.718 |
| 7 | -2.784 | 1.080 | 1.53500 | 55.75 | |
| 8 | -1.658 | 0.380 | | | |
| 9 | 1.301 | 0.324 | 1.53500 | 55.75 | |
| 10 | 0.698 | 0.290 | | | |
| 11 | infinity | 0.110 | 1.51680 | 64.20 | |
| 12 | infinity | 0.572 | | | |
| Imaging surface (img) | infinity | 0.028 | | | |

[Table 15] and [Table 16] below describe the aspherical coefficients of the lenses L1, L2, L3, and L4 of the lens assembly 800, and the aspherical coefficients may be calculated through [Equation 1] described above with reference to [Table 3] and [Table 4].

[Table 15]

| Lens surface (Surface) | S3 | S4 | S5 | S6 |
|---|---|---|---|---|
| K(Conic) | 1.6001E+00 | -9.9900E+01 | 7.6093E+01 | -6.2783E+00 |
| A(4th)/C4 | -5.5538E-02 | -4.6088E-02 | 8.6523E-03 | 5.9586E-02 |
| B(6th)/C5 | -7.2582E-03 | 1.3575E-03 | 2.7862E-03 | 2.9743E-03 |

(continued)

| Lens surface (Surface) | S3 | S4 | S5 | S6 |
|---|---|---|---|---|
| C(8th)/C6 | -1.2998E-03 | -6.4658E-04 | -1.2826E-04 | 8.6152E-04 |
| D(10th)/C7 | -1.9799E-04 | -4.8104E-05 | -1.3543E-04 | -5.7940E-05 |
| E(12th)/C8 | -6.9480E-05 | 2.4854E-05 | 4.8964E-05 | 4.6746E-05 |
| F(14th)/C9 | 2.7727E-07 | 9.6471E-06 | -7.9113E-06 | -3.7737E-05 |
| G(16th)/C10 | -8.3881E-06 | -2.9393E-05 | -1.6968E-05 | 8.9046E-06 |
| H(18th)/C11 | 1.0181E-06 | 1.8936E-05 | 7.9755E-06 | -1.3070E-05 |
| J(20th)/C12 | -8.2695E-06 | -7.6445E-06 | -7.1390E-07 | 8.6126E-06 |
| K(22nd)/C13 | 4.7853E-06 | 7.7649E-06 | 5.7242E-06 | -1.0231E-05 |
| L(24th)/C14 | 2.8986E-06 | -8.9209E-06 | -3.6573E-06 | 3.5098E-06 |
| M(26th)/C15 | -2.4811E-07 | 6.8161E-06 | 0.0000E+00 | 9.8334E-07 |
| N(28th)/C16 | 0.0000E+00 | -6.1288E-06 | 0.0000E+00 | 1.0069E-06 |
| O(30th)/C17 | 0.0000E+00 | 2.1335E-06 | 0.0000E+00 | -5.1835E-06 |

[Table 16]

| Lens surface (Surface) | S7 | S8 | S9 | S10 |
|---|---|---|---|---|
| K(Conic) | 2.9946E+00 | -4.9100E+00 | -1.6538E01 | -4.3607E+00 |
| A(4th)/C4 | -4.5457E-02 | -2.7176E-01 | -1.3756E+00 | -1.7231E+00 |
| B(6th)/C5 | -2.5166E-03 | 7.9853E-02 | 5.5173E-01 | 3.3358E-01 |
| C(8th)/C6 | 5.0581E-04 | -4.2659E-03 | -1.7635E-01 | -1.0282E-01 |
| D(10th)/C7 | 5.7536E-04 | -2.7286E-04 | 2.8101E-02 | 3.6651E-02 |
| E(12th)/C8 | 1.9036E-04 | -3.5512E-03 | -1.7626E-03 | -2.8363E-02 |
| F(14th)/C9 | 2.2130E-04 | 7.9047E-04 | 7.4033E-03 | 8.9374E-03 |
| G(16th)/C10 | 5.6566E-05 | 3.4124E-04 | -4.4447E-03 | -2.5248E-03 |
| H(18th)/C11 | 5.9434E-05 | 2.6879E-04 | 3.0366E-04 | 2.9166E-03 |
| J(20th)/C12 | 9.1027E-06 | -1.1575E-04 | 9.9013E-04 | 9.4326E-05 |
| K(22nd)/C13 | 2.9652E-05 | -7.1030E-05 | -6.5859E-04 | 2.1892E-04 |
| L(24th)/C14 | 2.4622E-06 | -3.4664E-05 | 2.6619E-04 | -2.7957E-05 |
| M(26th)/C15 | 5.3645E-06 | 3.4342E-05 | -1.3553E-04 | -1.5185E-04 |
| N(28th)/C16 | -9.4991E-06 | 2.2532E-05 | 1.4291E-04 | 7.8206E-05 |
| O(30th)/C17 | -3.9426E-07 | 1.7476E-05 | -1.2893E-04 | -8.6076E-05 |

FIG. 10B is a graph showing the spherical aberrations of the lens assembly 800 according to an embodiment of the disclosure, in which the horizontal axis represents the coefficient of longitudinal spherical aberration, and the vertical axis represents the normalized distance from the optical axis O-I and shows the change in longitudinal spherical aberration depending on the wavelength of light. The longitudinal spherical aberrations are represented for light beams with wavelengths of, for example, 656.3000 (nanometer (NM)), 587.6000 (NM), 546.1000 (NM), 486.1000 (NM), and 435.8000 (NM), respectively. FIG. 10C is a graph showing the astigmatic field curves of the lens assembly 800 according to an embodiment of the disclosure for light with a wavelength of 546.1000 (NM), in which "S" exemplifies a sagittal plane, and "T" exemplifies a tangential plane or meridional plane. FIG. 10D is a graph showing the distortion of the lens assembly 800 according to an embodiment of the disclosure for light with a wavelength of 546.1000 (NM). An optical system including a plurality of lenses may be applied to camera modules of various electronic devices (e.g., smartphones, tablet PCs, smartwatches, drones). In general, aberrations occur in an optical system due to the shape of lenses, and in order to provide good optical performance, it is necessary to minimize these aberrations. In general, in order to reduce aberrations in an optical system, a method of using a relatively small sensor, applying a dark lens while using a large sensor, or increasing the total length of a lens may be applied.

The embodiments disclosed herein are intended to solve at least the problems and/or disadvantages described above and provide at least the advantages to be described later, and may provide a lens assembly (or an optical system) optimized for a high-pixel image sensor with a reduced total length and improved optical performance (aberration control performance and brightness), and an electronic device including the same.

Some embodiments disclosed herein may provide a lens assembly for implementing a bright wide-angle camera with high pixels while being miniaturized and/or slimmed to be suitable for application to a hole-in-display.

According to an embodiment disclosed herein, the lens assembly may be easily mounted on a miniaturized and/or light-reduced electronic device such as a smartphone, and may contribute to expanding the optical function or improving the optical performance in the electronic device.

The technical problems to be addressed by the disclosure are not limited to those described above, and other technical problems, which are not described above, may be clearly understood by a person ordinarily skilled in the related art, to which the disclosure belongs, from the description of the disclosure.

The effects which can be obtained by the disclosure are not limited to those described above, and other effects, which are not described above, may be clearly understood by a person ordinarily skilled in the technical field, to which the present disclosure belongs, from the description of the disclosure.

Some embodiments of the disclosure may provide an electronic device. The electronic device may include a lens assembly 400, 500, 600, 700, or 800. The lens assembly may include a lens group including a first lens L1, a second lens L2, a third lens L3, and a fourth lens L4 sequentially arranged along an optical axis O-I in a direction from an object O side to an image I side, an aperture sto, and an image sensor IS including an imaging surface img on which an image I is formed. The first lens may have positive refractive power, the second lens may have negative refractive power, the third lens may have a convex shape toward the image side, and the fourth lens may have negative refractive power, and the lens assembly may satisfy [Formula 1] to [Formula 4] below,

$$[\text{Formula 1}]:$$

$$\text{IH} \geq 2.8 \text{ mm}$$

$$[\text{Formula 2}]:$$

$$\text{TTL-ASL} \leq 0.01 \text{ mm}$$

$$[\text{Formula 3}]:$$

$$\text{L2MED/L1S1ED} \leq 1.05$$

$$[\text{Formula 4}]:$$

$$\text{f/EPD} \leq 2.5$$

(here, in [Formula 1], IH is half the diagonal length of the image sensor, in [Formula 2], TTL is the distance from the object-side surface S3 of the first lens to the imaging surface of the image sensor, and ASL is the distance from the aperture to the imaging surface of the image sensor, in [Formula 3], L1S1ED is the effective diameter of the object-side surface S3 of the first lens, and L2MED is a larger value between the effective diameter of an object-side surface S5 of the second lens and the effective diameter of the image-side surface S6 of the second lens, and in [Formula 4], f is the composite focal length of the lens assembly, and EPD is an entrance pupil).

According to an embodiment, the lens assembly may satisfy [Formula 5] below,

[Formula 5]:

$$17 < V2 < 25$$

(here, V2 in [Formula 5] is the Abbe number of the second lens at a wavelength of 587.6 nm).

According to an embodiment, the object-side surface S3 of the first lens may have a convex shape toward the object side.

According to an embodiment, the lens assembly may satisfy [Formula 6] below,

[Formula 6]:

$$N2 \geq 1.66$$

(here, N2 in [Formula 6] is the refractive index of the second lens at a wavelength of 587.6 nm).

According to an embodiment, the lens assembly may satisfy [Formula 7] below,

[Formula 7]:

$$N1 \leq 1.6$$

(here, N1 in [Formula 7] is the refractive index of the first lens at a wavelength of 587.6 nm).

According to an embodiment, the lens assembly may satisfy [Formula 8] below,

[Formula 8]:

$$N4 \leq 1.6$$

(here, N4 in [Formula 8] is the refractive index of the fourth lens at a wavelength of 587.6 nm).

According to an embodiment, the second lens may have negative refractive power and satisfy [Formula 9] below,

[Formula 9]:

$$CT2 \geq 0.15 \text{ mm}$$

(here, CT2 in [Formula 9] is the central thickness of the second lens).

According to an embodiment, the second lens may have negative refractive power, and the image-side surface S6 of the second lens has a concave shape toward the image side.

According to an embodiment, at least one of the object-side surface S9 or the image-side surface S10 of the fourth lens may be formed to have at least one inflection point.

According to an embodiment, the lens assembly may satisfy [Formula 10] below,

[Formula 10]:

$$SD/TTL \leq 0.9$$

(here, SD in [Formula 10] is the distance from the object-side surface S3 of the first lens to the image-side surface S10 of the fourth lens, and TTL is the distance from the object-side surface S3 of the first lens to the image forming surface of the image sensor).

According to an embodiment, the lens assembly may satisfy [Formula 11] below,

[Formula 11]:

$$1.0 < TTL/f$$

(here, TTL in [Formula 11] is the distance from the object-side surface S3 of the first lens to the imaging surface of the image sensor, and f is the composite focal length of the lens assembly).

According to an embodiment, the electronic device may further include a display 201 or 301 including at least one through hole 341. The first lens L1 and at least a portion of the second lens L2 may be disposed in the through hole.

According to an embodiment, the display may include a support panel 330, a display panel 320 disposed on a surface of the support panel facing a first direction, and a cover glass 310 disposed on a surface of the display panel facing the first direction.

According to an embodiment, the through hole may be formed from the surface of the support panel oriented in a direction opposite to the first direction to the surface of the display panel oriented in the first direction.

According to an embodiment, the aperture may be disposed to face the object-side surface S3 of the first lens.

Some embodiments of the disclosure may provide a lens assembly 400, 500, 600, 700, or 800). The lens assembly may include a lens group including a first lens L1, a second lens L2, a third lens L3, and a fourth lens L4 sequentially arranged along an optical axis O-I in a direction from an object O side to an image I side, an aperture sto, and an image sensor IS including an imaging surface img on which an image I is formed. The first lens may have positive refractive power, the object-side surface S3 of the first lens may have a convex shape toward an object, the second lens has negative refractive power, the third lens has a convex shape toward the image side, and the fourth lens has negative refractive power, and the lens assembly may satisfy [Formula 1] to [Formula 4] below.

[Formula 1]:

$$IH \geq 2.8 \text{ mm}$$

[Formula 2]:

$$TTL-ASL \leq 0.01 \text{ mm}$$

[Formula 3]:

$$L2MED/L1S1ED \leq 1.05$$

[Formula 4]:

$$f/EPD \leq 2.5$$

(here, in [Formula 1], IH is half the diagonal length of the image sensor, in [Formula 2], TTL is the distance from the object-side surface S3 of the first lens to the imaging surface of the image sensor, and ASL is the distance from the aperture to the imaging surface of the image sensor, in [Formula 3], L1S1ED is the effective diameter of the object-side surface S3 of the first lens, and L2MED is a larger value between the effective diameter of an object-side surface S5 of the second lens and the effective diameter of the image-side surface S6 of the second lens, and in [Formula 4], f is the composite focal length of the lens assembly, and EPD is an entrance pupil).

According to an embodiment, the second lens may satisfy [Formula 5] and [Formula 6] below,

$$[\text{Formula 5}]:$$

$$V2 < 25$$

$$[\text{Formula 6}]:$$

$$N2 \geq 1.66$$

(here, V2 in [Formula 5] is the Abbe number of the second lens at a wavelength of 587.6 nm, and N2 in [Formula 6] is the refractive index of the second lens at a wavelength of 587.6 nm).

According to an embodiment, the lens assembly may satisfy [Formula 7] and [Formula 8] below,

$$[\text{Formula 7}]:$$

$$N1 \leq 1.6$$

$$[\text{Formula 8}]:$$

$$N4 \leq 1.6$$

(here, N1 in [Formula 7] is the refractive index of the first lens at a wavelength of 587.6 nm, and N4 in [Formula 8] is the refractive index of the fourth lens at a wavelength of 587.6 nm).

According to an embodiment, the second lens may have negative refractive power and may satisfy [Formula 9] below, and the image-side surface S6 of the second lens may have a concave shape toward the image side, and

at least one of the object-side surface S9 or the image-side surface S10 of the fourth lens may be formed to have at least one inflection point,

$$[\text{Formula 9}]:$$

$$CT2 \geq 0.15 \text{ mm}$$

(here, CT2 in [Formula 9] is the central thickness of the second lens).

According to an embodiment, the lens assembly may satisfy [Formula 10] and [Formula 11] below,

[Formula 10]:

$$SD/TTL \leq 0.9$$

[Formula 11]:

$$1.0 < TTL/f$$

(here, in [Formula 10], SD is the distance from the object-side surface S3 of the first lens to the image-side surface S10 of the fourth lens, TTL is the distance from the object-side surface S3 of the first lens to the image forming surface of the image sensor, and in [Formula 11], TTL is the distance from the object-side surface S3 of the first lens to the imaging surface of the image sensor, and f is the composite focal distance of the lens assembly).

An embodiment disclosed herein should be understood as an example rather than limiting the disclosure. It will be apparent to those skilled in the art that various changes can be made in form and detail without departing from the overall scope of the disclosure, including the appended claims and equivalents to the same.

An electronic device according to an embodiment disclosed herein may be any of various types of devices. The electronic device may include, for example, a portable communication device (e.g., a smartphone), a computer device, a portable multimedia device, a portable medical device, a camera, a wearable device, or a home appliance. The electronic device according to an embodiment disclosed herein is not limited to the above-described devices.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to an embodiment, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

While example embodiments of the disclosure have been shown and described, the disclosure is not limited to the aforementioned specific embodiments, and it is to be understood that various modifications may be made by those having ordinary skill in the technical field to which the disclosure belongs, without departing from the gist of the disclosure as claimed by the appended claims. Further, it is intended that such modifications are not to be interpreted independently from the technical idea or prospect of the disclosure.

**Claims**

1. An electronic device (101) comprising:

   a lens assembly (400; 500; 600; 700; 800) comprising:

   a lens group comprising a first lens (L1), a second lens (L2), a third lens (L3), and a fourth lens (L4) sequentially arranged along an optical axis (O-I) in a direction from an object (O) side to an image (I) side; an aperture (sto); and

   an image sensor (IS) comprising an imaging surface (img) on which an image (I) is formed, wherein the first lens has positive refractive power, and the second lens has negative refractive power, the third lens has a convex shape toward the image side, and the fourth lens has negative refractive power, and wherein the lens assembly satisfies [Formula 1] to [Formula 4] below,

   [Formula 1]
   $$IH \geq 2.8mm$$

   [Formula 2]
   $$TTL\text{-}ASL \leq 0.01mm$$

   [Formula 3]
   $$L2MED/L1S1ED \leq 1.05$$

   [Formula 4]
   $$f/EPD \leq 2.5$$

   (here, in [Formula 1], IH is half a diagonal length of the image sensor, TTL in [Formula 2] is a distance from an object-side surface (S3) of the first lens to the imaging surface of the image sensor, and ASL is a distance from the aperture to the imaging surface of the image sensor, in [Formula 3], L1S1ED is an effective diameter of the object-side surface (S3) of the first lens, and L2MED is a larger value between an effective diameter of an object-side surface (S5) of the second lens and an effective diameter of a surface of an image-side surface (S6) of the second lens, in [Formula 4], f is a composite focal length of the lens assembly, and EPD is an entrance pupil).

2. The electronic device of claim 1, wherein the lens assembly satisfies [Formula 5] below,

[Formula 5]

$$17 < V2 < 25$$

(here, V2 in [Formula 5] is the Abbe number of the second lens at a wavelength of 587.6nm)

3. The electronic device according to claim 1 or 2, wherein the object-side surface (S3) of the first lens has a convex shape toward the object side.

4. The electronic device according to any one of claims 1 to 3, wherein the lens assembly satisfies [Formula 6] below,

[Formula 6]

$$N2 \geq 1.66$$

(here, N2 in [Formula 6] is a refractive index of the second lens at a wavelength of 587.6nm).

5. The electronic device according to any one of claims 1 to 4, wherein the lens assembly satisfies [Formula 7] below,

[Formula 7]

$$N1 \leq 1.6$$

(here, N2 in [Formula 7] is a refractive index of the second lens at a wavelength of 587.6nm).

6. The electronic device according to any one of claims 1 to 5, wherein the lens assembly satisfies [Formula 8] below,

[Formula 8]

$$N4 \leq 1.6$$

(here, N4 in [Formula 8] is a refractive index of the fourth lens at a wavelength of 587.6nm).

7. The electronic device according to any one of claims 1 to 6, wherein the second lens has negative refractive power and satisfies [Formula 9] below,

[Formula 9]

$$CT2 \geq 0.15 \text{ mm}$$

(here, CT2 in [Formula 9] is a central thickness of the second lens).

8. The electronic device according to any one of claims 1 to 7, wherein the second lens has negative refractive power, and the image-side surface (S6) of the second lens has a concave shape toward the image side.

9. The electronic device according to any one of claims 1 to 8, wherein at least one of an object-side surface (S9) or an image-side surface (S10) of the fourth lens is formed to have at least one inflection point.

10. The electronic device according to any one of claims 1 to 9, wherein the lens assembly satisfies [Formula 10] below,

[Formula 10]

$$SD/TTL \leq 0.9$$

(here, SD in [Formula 10] is a distance from the object-side surface (S3) of the first lens to an image-side surface (S10) of the fourth lens, and TTL is a distance from the object-side surface (S3) of the first lens to the image forming surface of the image sensor)

11. The electronic device according to any one of claims 1 to 10, wherein the lens assembly satisfies [Formula 11] below,

[Formula 11]

$$1.0 < TTL/f$$

(here, TTL in [Formula 11] is the distance from the object-side surface (S3) of the first lens to the imaging surface of the image sensor, and f is the composite focal length of the lens assembly)

12. The electronic device according to any one of claims 1 to 11, further comprises a display (201; 301) comprising athrough hole (341), and
wherein the first lens (L1) and at least a portion of the second lens (L2) are disposed in the through hole.

13. The electronic device of claim 12, wherein the display (201; 301) further comprises: a support panel (330); a display panel (320) disposed on a surface of the support panel facing a first direction; and a cover glass (310) disposed on a surface of the display panel facing the first direction.

14. The electronic device of claim 13, wherein the through hole is formed through a surface of the support panel, facing a second direction opposite to the first direction, to a surface of the display panel facing the first direction.

15. The electronic device according to any one of claims 1 to 14, wherein the aperture is disposed to face the object side surface (S3) of the first lens.

FIG. 1

ELECTRONIC DEVICE 101

INPUT MODULE 150

SOUND OUTPUT MODULE 155

DISPLAY MODULE 160

MEMORY 130

MEMORY 132

VOLATILE MEMORY 132

NON-VOLATILE MEMORY 134

INTERNAL MEMORY 136

EXTERNAL MEMORY 138

PROGRAM 140

APPLICATION 146

MIDDLEWARE 144

OPERATING SYSTEM 142

BATTERY 189

POWER MANAGEMENT MODULE 188

PROCESSOR 120

MAIN PROCESSOR 121

AUXILIARY PROCESSOR 123

COMMUNICATION MODULE 190

WIRELESS COMMUNICATION MODULE 192

WIRED COMMUNICATION MODULE 194

SUBSCRIBER IDENTIFICATION MODULE 196

ANTENNA MODULE 197

AUDIO MODULE 170

SENSOR MODULE 176

INTERFACE 177

CONNECTING TERMINAL 178

HAPTIC MODULE 179

CAMERA MODULE 180

SECOND NETWORK 199

FIRST NETWORK 198

ELECTRONIC DEVICE 104

ELECTRONIC DEVICE 102

SERVER 108

EP 4 749 343 A1

35

FIG. 2

**FIG. 3**

FIG. 4

FIG. 5

FIG. 6A

LONGITUDINAL SPHERICAL ABER.

| | 656.3000 NM |
|---|---|
| | 587.6000 NM |
| | 546.1000 NM |
| | 486.1000 NM |
| | 435.8000 NM |

FOCUS:mm

FIG. 6B

ASTIGMATIC FIELD CURVES

IH

FOCUS:mm

FIG. 6C

DISTORTION

IH

DISTORTION:%

FIG. 6D

## FIG. 7A

LONGITUDINAL SPHERICAL ABER.

FIG. 7B

ASTIGMATIC FIELD CURVES
IH

DISTORTION
IH

FOCUS:mm

DISTORTION:%

FIG. 7C

FIG. 7D

FIG. 8A

LONGITUDINAL SPHERICAL ABER.

FIG. 8B

ASTIGMATIC FIELD CURVES

IH

S  T  2.86

2.14

1.43

0.71

-0.08  -0.04  0.0  0.04  0.08

FOCUS:mm

FIG. 8C

DISTORTION

IH

2.86

2.14

1.43

0.71

-5.0  -2.5  0.0  2.5  5.0

DISTORTION:%

FIG. 8D

700

FIG. 9A

LONGITUDINAL SPHERICAL ABER.

FIG. 9B

ASTIGMATIC FIELD CURVES

IH

S T — — — — 2.80

2.10

1.40

0.70

-0.08  -0.04  0.0  0.04  0.08

FOCUS:mm

## FIG. 9C

DISTORTION

IH

2.80

2.10

1.40

0.70

-5.0  -2.5  0.0  2.5  5.0

DISTORTION:%

## FIG. 9D

FIG. 10A

LONGITUDINAL SPHERICAL ABER.

FOCUS:mm

# FIG. 10B

ASTIGMATIC FIELD CURVES

DISTORTION

FIG. 10C

FIG. 10D

## INTERNATIONAL SEARCH REPORT

| International application No. |
| --- |
| **PCT/KR2024/016332** |

### A. CLASSIFICATION OF SUBJECT MATTER

**G02B 13/00**(2006.01)i; **G02B 9/34**(2006.01)i; **G02B 9/02**(2006.01)i; **G03B 9/02**(2006.01)i; **G02B 3/00**(2006.01)i

According to International Patent Classification (IPC) or to both national classification and IPC

### B. FIELDS SEARCHED

Minimum documentation searched (classification system followed by classification symbols)

G02B 13/00(2006.01); G02B 13/06(2006.01); G02B 13/18(2006.01); H04N 5/225(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 굴절력(refractive power), 유효경(effective diameter), TTL, 입사동(entrance pupil diameter), 합성 초점 거리(composite focal length), 조리개(stop, aperture), 아베수(abbe number), f값(f-number)

### C. DOCUMENTS CONSIDERED TO BE RELEVANT

| Category* | Citation of document, with indication, where appropriate, of the relevant passages | Relevant to claim No. |
| --- | --- | --- |
| A | US 2011-0025903 A1 (NAOI, Yuki) 03 February 2011 (2011-02-03)<br>See paragraph [0114], claim 1 and figures 5-6c. | 1-15 |
| A | JP 2009-151113 A (OLYMPUS CORP.) 09 July 2009 (2009-07-09)<br>See paragraphs [0063]-[0066], claim 1 and figure 4. | 1-15 |
| A | CN 111505809 A (SHENZHEN GOODIX TECHNOLOGY CO., LTD.) 07 August 2020 (2020-08-07)<br>See paragraphs [0070]-[0072], [0104] and [0105] and figure 4. | 1-15 |
| A | JP 2010-008660 A (OLYMPUS CORP.) 14 January 2010 (2010-01-14)<br>See paragraph [0083], claim 1 and figure 1. | 1-15 |
| A | JP 2015-034940 A (KANTATSU CO., LTD.) 19 February 2015 (2015-02-19)<br>See paragraph [0059], claim 1 and figure 1. | 1-15 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **24 January 2025** | **24 January 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

| | | International application No. **PCT/KR2024/016332** |
|---|---|---|

| Patent document cited in search report | | | Publication date (day/month/year) | Patent family member(s) | | | Publication date (day/month/year) |
|---|---|---|---|---|---|---|---|
| US | 2011-0025903 | A1 | 03 February 2011 | JP | 5353879 | B2 | 27 November 2013 |
| | | | | JP | WO2009-122897 | A1 | 28 July 2011 |
| | | | | US | 8315000 | B2 | 20 November 2012 |
| | | | | WO | 2009-122897 | A1 | 08 October 2009 |
| JP | 2009-151113 | A | 09 July 2009 | JP | 5226291 | B2 | 03 July 2013 |
| CN | 111505809 | A | 07 August 2020 | CN | 111505809 | B | 16 October 2020 |
| JP | 2010-008660 | A | 14 January 2010 | JP | 5350688 | B2 | 27 November 2013 |
| JP | 2015-034940 | A | 19 February 2015 | CN | 204256250 | U | 08 April 2015 |
| | | | | JP | 6171184 | B2 | 02 August 2017 |
| | | | | US | 2015-0043092 | A1 | 12 February 2015 |
| | | | | US | 9507122 | B2 | 29 November 2016 |

Form PCT/ISA/210 (patent family annex) (July 2022)